# EUROPEAN PATENT SPECIFICATION

(11) **EP 2 130 392 B1**
(45) Date of publication and mention of the grant of the patent: **21.08.2019**
(21) Application number: 08709387.8
(22) Date of filing: 13.02.2008
(51) Int. Cl.: H04W 84/08, H04W 88/02, H04W 88/04

(54) **CONFIGURABLE APPARATUS AND METHOD**
KONFIGURIERBARE VORRICHTUNG UND VERFAHREN
APPAREIL CONFIGURABLE ET PROCÉDÉ

(30) Priority: 13.02.2007 GB 0702771
(43) Date of publication of application: 09.12.2009
(73) Proprietor: Sepura PLC, Cambridge CB25 9TL (GB)
(72) Inventor: RODMELL, Clive, Hertfordshire AL1 3AX (GB); AVERY, Martin, John, Cambridge CB23 8DT (GB)
(74) Representative: Dehns
(86) International application number: PCT/GB2008/000493
(87) International publication number: WO 2008/099168

(56) References cited:
- WO-A-2004/039117
- "Terrestrial Trunked Radio (TETRA); Technical requirements for Direct Mode Operation (DMO); Part 5: Gateway air interface; ETSI EN 300 396-5" ETSI STANDARDS, LIS, SOPHIA ANTIPOLIS CEDEX, FRANCE, vol. TETRA-2, no. V1.2.1, 1 May 2006 (2006-05-01), XP014034036 ISSN: 0000-0001

## Description

The present invention relates to communications systems and in particular to mobile communications systems in which mobile terminals can communicate with each other without needing to transmit via the mobile communications systems' network infrastructure.

Many mobile communications systems support both communication via a fixed network infrastructure (which is typically trunked communication), and "direct" communication between mobile terminals which does not pass via the network infrastructure.

The TETRA (TErrestrial Trunked RAdio) system is an example of a mobile communications system that supports both these communications modes. In a TETRA system, communication via the TETRA V+D (Voice + Data) network infrastructure is referred to as trunked mode operation (TMO) (and/or as operating over the TETRA V+D (Voice + Data) air interface), and communication between mobile terminals independently of the (trunked mode operation) network is known as direct mode operation (DMO) (and/or as operating over the DMO air interface).

In a TETRA system, a given mobile terminal can typically be operated either in direct mode or in trunked mode, for example at the choice of the user.

It is also known in TETRA systems to provide devices that are known as direct mode "repeaters". A DMO repeater is radio equipment that can provide an interconnection of services (such as calls and/or short data messages) between two or more TETRA terminals that are operating in direct mode. A "repeater" effectively acts as a relay in a communication path between two (or more) DMO terminals, to, e.g., allow the terminals to communicate with each other even if they are each beyond the radio range of the other. Thus, a repeater can, *inter alia*, receive call traffic over a direct mode air interface and relay (transmit) that traffic over a direct mode air interface. TETRA gateway operation is defined in the standard ETSI EN 300 396-5 (TETRA DMO Gateway Air Interface.

WO 2004/039117 A1 describes a system and method for content delivery using alternative data paths in a wireless network. US 7 127 265 B2 discloses a gateway unit based on two pieces of terminal devices known as such and supporting both TETRA modes, DMO and TMO.

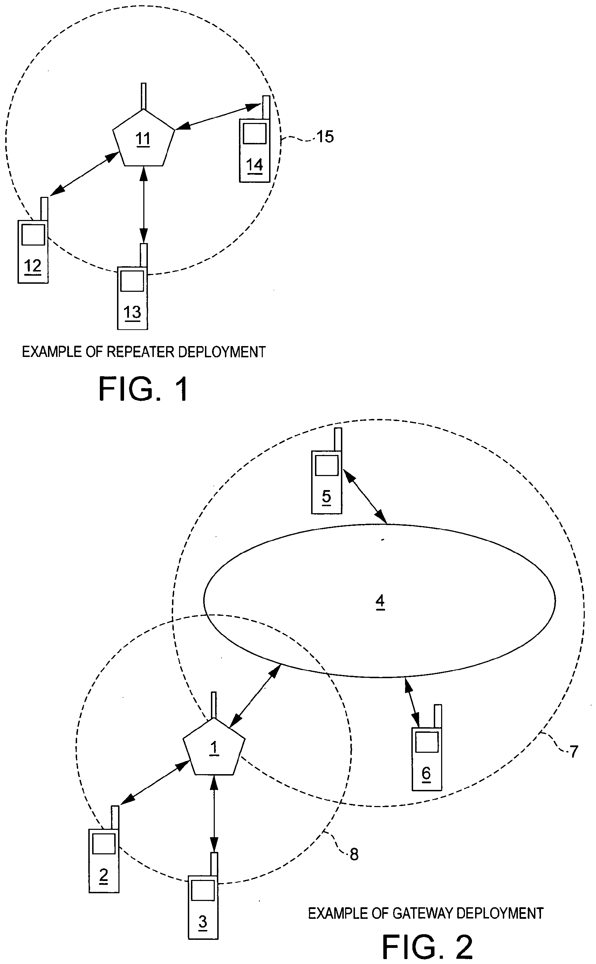

The invention is set out in the appended claims. Figure 1 shows schematically a typical repeater arrangement. The repeater 11 provides a communication path between terminals 12, 13 and 14 that are operating in direct mode. The repeater 11 has a direct mode coverage area 15.

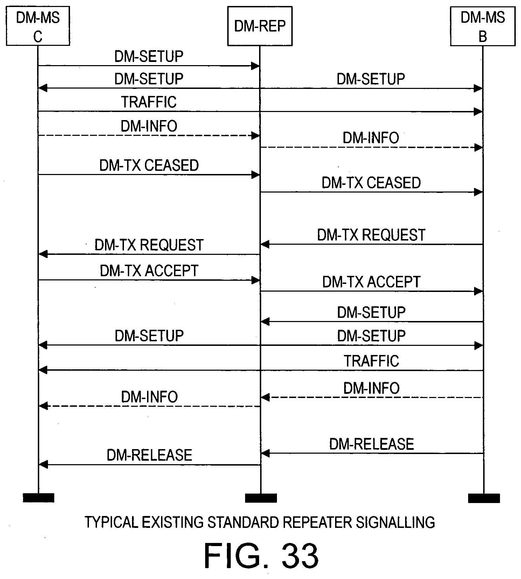

Figure 33 illustrates existing TETRA Repeater signalling as defined in ETSI EN 300 396-4 (TETRA DMO Type 1 Repeater Air Interface).

As shown in Figures 1 and 33, DMO terminals DM-MS C (12) and DM-MS B (14) communicate via the services of DMO Repeater DM-REP (11), which receives and re-transmits signalling and traffic. Signalling and traffic that is sent by a DMO terminal on the Master Link and addressed to the repeater's repeater address may be re-transmitted by the repeater on the slave link. Signalling that is sent by a DMO terminal on the Slave Link and addressed to the repeater's repeater address may be re-transmitted by the repeater on the Master Link. Master Link and Slave Link channels exist by time division on a DMO radio channel whereby, following the initial setup signalling, the Slave Link timing is 3 timeslots later than the Master Link timing.

As shown in Figure 33, DMO terminal DM-MS C (12) sends call setup signalling (DM-SETUP) on the Master Link to DM-REP (11), which receives and re-transmits DM-SETUP on the Slave Link to DM-MS B (14). The repeated DM-SETUP on the Slave Link is also received by DM-MS C as confirmation that it has established a link to DM-REP. Thereafter, DM-MS C sends traffic on the Master Link, which DM-REP re-transmits on the Slave Link 3 timeslots later.

DM-MS C may also send additional signalling during the call (e.g. DM-INFO) which is re-transmitted by DM-REP. DM-MS C also sends occupation signalling periodically during the-call (DM-OCCUPIED), (not shown in Figure 33) via DM-REP to maintain the call.

If DM-MS C signals the end of its transmission (DM-TX CEASED), that is re-transmitted by DM-REP. DM-MS C now sends reservation signalling periodically (DM-RESERVED) (not shown in Figure 33) via DM-REP to hold the DMO channel in reservation.

DM-MS B can request permission to transmit by sending DM-TX REQUEST on the Slave Link, which is repeated by DM-REP on the Master Link 5 timeslots later. Following acceptance of the Tx request by DM-MS C, DM-MS B now uses the Master Link to perform call setup via DM-REP to DM-MS C on the Slave Link in the same manner, ending in this example by releasing the call.

Signalling transmitted by DM-MS C to DM-MS B via DM-REP includes three addresses: DM-MS C as the Source Address, DM-MS B as the Destination Address, and DM-REP as the Repeater Address. The Destination Address may be an individual address that is normally recognised by only one DMO terminal, or may be a group address that may be recognised by a plurality of DMO terminals, e.g. DM-MS A, DM-MS B and DM-MS C.

Although not shown in Figure 33, DM-REP may transmit occasional Presence Signals prior to the sequence of events to inform DM-MS A, DM-MS B and DM-MS C of the availability of DM-REP and to provide frequency and timing references. DM-REP may transmit Presence Signals on the Master Link during the call to maintain the Master Link between DM-MS C (subsequently DM-MS B) and DM-REP. DM-REP may transmit Presence Signals on the Slave Link during the call to maintain the availability of DM-REP to DM-MS B (subsequently DM-MS C).

Although not shown in Figure 33, DM-MS C and DM-MS B may also exchange SDS messages (DM-SDS UDATA or DM-SDS DATA) via DM-REP either during a call or when no call is in progress.

It is also known in TETRA systems to provide devices that are known as direct mode "gateways". A DMO gateway acts to interconnect communications and services between terminals that are operating in direct mode and a TETRA fixed (V+D (Voice + Data)) network. A "gateway" effectively acts to relay calls, etc., from a DMO "network" into the fixed, V+D, network and vice-versa, i.e. such that calls made in trunked mode operation or in direct mode operation may be simultaneously established both in the direct mode "network" and in the trunked mode network. Thus, a gateway can, inter alia, receive call traffic (or a short message) over a direct mode air interface and relay that traffic to the fixed (V+D) network, and receive call traffic (or a short - message) from the fixed (V+D) network and relay that traffic over a direct mode air interface.

Figure 2 shows an exemplary TETRA gateway arrangement.

In Figure 2, the boundary 7 denotes the radio coverage area of the TETRA trunked (V+D) network 4. Terminals 5 and 6 are within this boundary and so can communicate via the fixed network, over the TETRA V+D air interface 4, However, terminals 2 and 3 are outside the coverage area 7 of the fixed network and so are unable to communicate directly with the fixed (V+D) network 4 (however, they are able to communicate with each other via direct mode operation).

Figure 2 also shows a gateway 1 (which is, as discussed above, radio equipment that is able to set up calls and to operate on both the trunked (V+D) network air interface and the direct mode operation air interface, either simultaneously or quasi-simultaneously). The "direct mode" radio coverage area of the gateway 1 is shown by boundary 8 in Figure 2.

In standard TETRA operation of the gateway 1, terminal 2 can, for example, ask the gateway 1 to relay a direct mode call to the V+D network 4 and set up the direct mode call with terminal 3. In response to this, the gateway 1 will establish the call on the trunked (V+D) network 4, such that, for example, terminals 5 and 6 can be included in the call. Similarly, if the V+D terminal 5, for example, wishes to call terminal 2, the call is established in the trunked (V+D) network 4 to the gateway 1, and the gateway 1 then establishes a direct mode call to the DMO terminal 2, so that the gateway can then relay the trunked (V+D) network call traffic to the terminal 2.

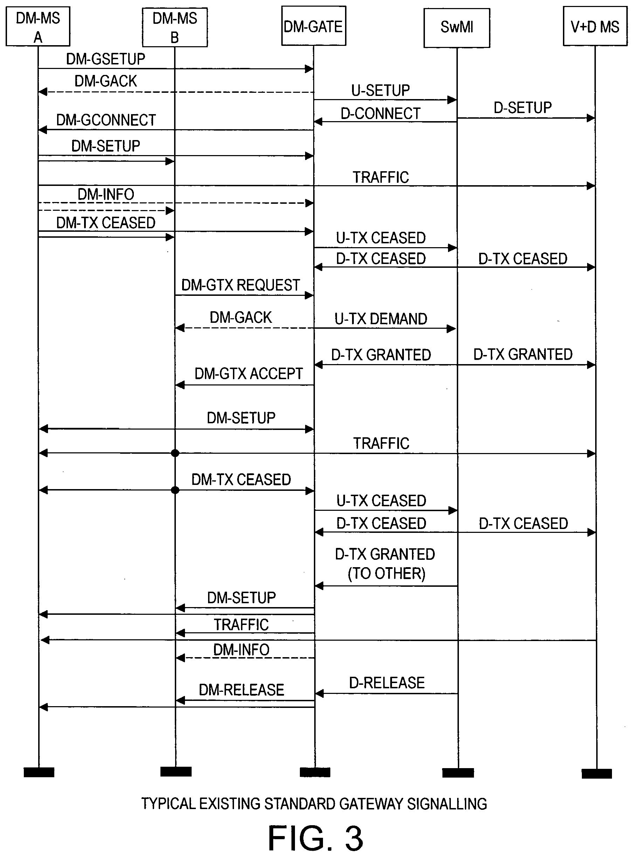

Figure 3 illustrates the signalling that is exchanged over the networks and via the gateway 1 in various modes of standard TETRA gateway operation.

As shown in Figure 3, in the gateway operation specified in the TETRA standard, if a direct mode operating terminal A (DM-MS A in Figure 3) requests a call to be set up via the Gateway (DM-GATE), then in response to this, the gateway transmits call establishment signalling on the V+D network (to the switching and management infrastructure, SwMI), which signalling is then received by one or more terminals that are operating in the fixed (V+D) network (V+D MS).

After this, the gateway (DM-GATE) sends confirmation signalling (DM-GCONNECT) (which signalling may also signal a timing change on the DMO air interface) to the DMO terminal DM-MS A. Once it has received the signalling, the DMO terminal DM-MS A sets up a DMO call which may, for example, be received, as shown in Figure 3, by another DMO terminal (DM-MS B) and by the gateway DM-GATE.

The originating DMO terminal DM-MS A can now send call traffic to the DMO terminal DM-MS B and to the gateway DM-GATE. The gateway DM-GATE retransmits this call traffic to the fixed network infrastructure (SwMI) which then retransmits it to the trunked mode terminal(s) (V+D MS).

Figure 3 also shows the gateway operation in the case where, following the end of transmission by the DMO terminal DM-MS A, a second DMO terminal, DM-MS B, requests (DM-GTX REQUEST) via the gateway DM-GATE permission to transmit on the V+D network.

In this case, confirmation signalling (DM-GTX ACCEPT) is similarly sent from the gateway DM-GATE to the DMO terminal DM-MS B. Terminal DM-MS B then sets up a call and sends traffic to the DMO terminal DM-MS A and, via the gateway DM-GATE, to the trunked mode terminal(s) V+D MS.

As shown in Figure 3, a terminal V+D MS operating in the fixed network is also able to request transmission (U-TX DEMAND) within a call, and in response to this, the gateway DM-GATE will set up a DMO call (DM-SETUP) to the direct mode operating terminals DM-MS A and DM-MS B.

Once this has been done, the traffic from the fixed network terminal V+D MS is received by the fixed network SwMI, which retransmits it to the gateway DM-GATE, which in turn retransmits it to the direct mode operating terminals DM-MS A and DM-MS B.

Although not shown in Figure 3, it is also possible in standard TETRA gateway operation for a fixed network terminal V+D MS to originate a call to direct mode operating terminals DM-MS A and DM-MS B when the gateway DM-GATE is idle. A fixed network terminal V+D MS may also request pre-emptive transmission or pre-emptive call priority resulting in the gateway DM-GATE pre-empting any transmission of the direct mode operating terminals DM-MS A or DM-MS B.

It is also proposed in the TETRA DMO standards to have a device known as a DMO Repeater/Gateway, which can provide the services of a repeater and of a gateway simultaneously.

It is known in TETRA to provide a single device, such as suitable radio equipment, such as a terminal, that can have multiple operating modes, such as operating as a DMO terminal, as a DMO terminal operating via a DMO repeater, as a DMO terminal operating via a DMO gateway, as a DMO terminal operating via a repeater/gateway, as a DMO repeater, as a DMO gateway, or as a DMO repeater/gateway. In known such arrangements, the device will operate in one of its possible modes at any given time and cannot, for example, operate in two or more modes simultaneously.

However, the Applicants believe that there remains scope for improvement to existing arrangements for direct mode and trunked mode operation in communications systems such as TETRA. For example, whereas in known TETRA arrangements where a given terminal or device supports multiple operating modes, only a single operating mode of the device can be specified at any one time, the Applicants have recognised that in fact it may be desirable for a given radio equipment device (e.g. terminal) to be able to operate in two or more modes simultaneously.

Thus, according to a first aspect of the present invention, there is provided an apparatus as claimed in claim 1.

According to a second aspect of the present invention, there is provided a method as claimed in claim 6.

According to a third aspect of the present invention, there is provided a computer program product as claimed in claim 11 comprising computer software code portions for performing the method of any one of claims 6 to 10 when the computer software code portions are run on data processing means of the apparatus according to the first aspect.

The present invention provides an arrangement in which communications apparatus which can act as a repeater or gateway, or as a repeater/gateway, can simultaneously act as a terminal in a call for which the apparatus is acting as a repeater and/or gateway. In other words, in the present invention, the apparatus can simultaneously operate, for example, as both a (direct mode) repeater and as a (direct mode) terminal operating via that repeater, or as both a (direct mode) gateway and as a (direct mode or V+D (trunked mode)) terminal operating via that gateway, or as a (direct mode) repeater/gateway and as a (direct mode or V+D (trunked mode)) terminal operating via that repeater/gateway.

The Applicants have recognised that such arrangements have a number of advantages. For example, they permit the user of a terminal that is acting as a repeater or gateway to participate in calls that are passing through the repeater or gateway, respectively, but without needing to cease providing the repeater and/or gateway service to other users.

Moreover, in the case of repeater applications, for example, the arrangement of the present invention may be particularly beneficial for covert body-worn applications, for example where the role of repeater may be dynamically assigned to any one of a number of users, for example based on operational requirements. In particular, the present invention can allow the repeater user to maintain normal communications capability while still providing the via-repeater operation coverage benefits for other users. It can also remove the need for each user to carry additional terminals (one to act as a repeater and one to use as a terminal) and avoid delays incurred in switching between operating modes (e.g. from repeater to terminal and vice-versa). (The invention is, of course, for example, also applicable to covert and overt vehicle installations (and, indeed, to other installations as well).)

Similarly, in the case of gateway (or repeater/gateway) operation in particular, the present invention is particularly advantageous for covert and overt vehicle installations, particularly where a user remains in the vehicle while the apparatus is operating in gateway mode. Again, the present invention can allow the gateway user to maintain normal communications capability while still providing the via-gateway operation fixed network coverage benefits to other users. It similarly can remove the need for the gateway user to have an additional terminal and avoid delays incurred in switching between operating modes (from gateway mode to terminal mode, and vice-versa).

The repeater and/or gateway function that is provided and performed by the apparatus of the present invention preferably includes relaying call traffic (a call) to the fixed or direct mode network (as appropriate) (for a gateway function) or repeating direct mode call traffic (for a repeater function), as appropriate. However, it may comprise only performing appropriate gateway or repeater signalling, such as providing gateway or repeater synchronisation signalling, for example for direct mode operating terminals, without, for example, also relaying and/or repeating call traffic. In this latter case, the terminal function of the apparatus would then, for example, participate in a direct mode call that the gateway function, e.g., is providing synchronisation signalling to (but not also relaying the call traffic to the fixed network).

The apparatus of the present invention or that is used in the method of the present invention can take any suitable and desired form. It should, as discussed above, at least be able to function as a gateway or as repeater and/or as a repeater/gateway for calls (e.g. and preferably at least for calls that are made by or to terminals communicating directly with each other (i.e. without transmitting via the fixed network infrastructure)).

The apparatus similarly should be able to support user participation in a call for which it is acting as a gateway and/or repeater, as discussed above. Again, this can be achieved as desired, but in a preferred embodiment the apparatus is able to function as a terminal (e.g. a mobile station) of the communications system to facilitate this. Thus, most preferably, the apparatus can function as and includes means for functioning as a terminal of the communications system, most preferably at least for functioning as a terminal that can communicate directly with other terminals (i.e. such that the communication does not pass via the network infrastructure) (in other words, in TETRA at least, as a DMO terminal).

Thus, in a particularly preferred embodiment, the apparatus of or for use in the method of the present invention can function as, or has means for functioning as, a gateway or a repeater or a repeater/gateway for terminals that are communicating with each other without transmitting via the network infrastructure (i.e. in direct mode) and can function as or has means for functioning as a terminal for communicating with other terminals of the system.

In one preferred embodiment, the terminal function of the apparatus can function as a terminal that can transmit to other terminals without transmitting via the network infrastructure (i.e. in direct mode (as a direct mode terminal)). In another preferred embodiment, the terminal function of the apparatus can (at least) function as a terminal that is operating via the fixed network (i.e. as a V+D and/or trunked mode terminal).

The terminal function of the apparatus can be configured in any suitable and desired manner. The apparatus will allow a user to initiate a call and/or to indicate a desire to transmit (in a call or otherwise), for example using a suitable transmit key (e.g. push-to-talk (PTT) key). The apparatus similarly preferably comprises suitable user interfaces, such as a microphone, speaker, and/or key pad, etc., to allow a user to participate in a call. Such arrangements have the advantage that a user of the apparatus can, in effect, interact with a call that is passing through the repeater and/or gateway "function" of the apparatus using the same interfaces (e.g. tactile, visual and audio interfaces) as when using a terminal in "normal" direct or trunked mode, etc..

Indeed, it is a preferred embodiment in general that a user of the apparatus can interact with a call that is passing through the repeater and/or gateway "function" of the apparatus using the same interfaces (e.g. tactile, visual and audio interfaces) as when using a terminal in "normal" direct or trunked mode, etc..

The gateway and/or repeater function and the terminal function of the apparatus can be provided in any suitable manner. Thus they could, for example, comprise, in effect, a repeater and/or gateway device, and a terminal device, of the communications system, arranged so as to be operable in the manner of the present invention.

In a particularly preferred embodiment, the repeater and/or gateway function or part of the apparatus of the present invention and the terminal function or part (e.g. the repeater and/or gateway device and the terminal device) are integrated into a single device, i.e. the apparatus is preferably an integral device (which is preferably made up of a single unit, but may comprise plural units) that includes the various functions.

It is also accordingly preferred, particularly where the gateway and/or repeater part and the terminal part are integrated into a single device, for the gateway and/or repeater "part" to and the terminal "part" have one or more common or shared components and/or functions, such as power, display, user interfaces, and/or audio outputs or inputs, etc..

The repeater and/or gateway function or part of the apparatus and the terminal function or part of the apparatus are coupled to (communicate with) each other by being linked at layer 1, layer 2, or layer 3 or any other layer of the International Standards Organisation Open System Interface Basic reference model.

For example, they could have directly connected RF (radio frequency), IF (intermediate frequency) and/or baseband signalling so as to avoid the need for full communications system air interface transmissions for this purpose.

In a preferred embodiment, the gateway and/or repeater function or part and the terminal function or part of the apparatus communicate via a local, short range interface. This may, for example, be a short range wireless interface such as infra-red, or, preferably, a short range radio interface such as Bluetooth or WiFi, etc.. More preferably, there is a wired communications interface between the repeater and/or gateway "part" and the terminal "part" of the apparatus. Most preferably there is a logical interface between the two.

In a particularly preferred embodiment, the terminal part or function of the apparatus is incorporated as a logical function or a "virtual" terminal, within a gateway and/or repeater device, and is, for example, and preferably, linked to the gateway and/or repeater function via a logical interconnection. Thus, most preferably, the apparatus comprises a purely logical combination of a virtual terminal within a gateway or repeater or repeater/gateway.

The user's call participation comprises allowing the user and/or the terminal operation to transmit within calls that are taking place via the repeater and/or gateway function of the apparatus, and also or instead allowing the user and/or terminal operation to originate calls via the repeater and/or gateway function of the apparatus.

It could, for example, and preferably does, also comprise allowing the user (or terminal operation) to monitor (receive) call information (e.g. the calling party, called party, etc.), and/or the call traffic of users of the gateway and/or repeater function. In one preferred embodiment, the user can listen to (monitor) (at least) call traffic of calls passing through the gateway and/or repeater function.

Thus, in a particularly preferred embodiment, the present invention comprises steps of or means for allowing a user and/or the terminal operation of the apparatus of the present invention to monitor (receive or listen to) the call information and/or the call traffic of calls using the repeater and/or gateway function of the apparatus.

The apparatus of and for use in the present invention can be configured to operate in any suitable and desired manner, for example in terms of the call participation, set-up, etc., signalling, that will allow a user, etc., to participate in a call in the manner of the present invention.

However, in a particularly preferred embodiment, the existing signalling protocols, etc., of the communications system in question are used so far as is possible. Most preferably the operation in the manner of the present invention is carried out at least so far as the air interface signalling is concerned, solely using air interface signalling that is in accordance with the appropriate existing communications system standards (e.g. TETRA standards in a TETRA system). This helps to ensure interoperability with existing and other equipment, etc., of the communications system in question.

In the case of monitoring or listening into calls that are proceeding via the gateway and/or repeater function of the apparatus, the apparatus is preferably configured to report call information to the user or terminal function, and/or to present call traffic (e.g. circuit mode traffic) appropriately to the user (via the apparatus) or terminal function, as if the user or terminal had been receiving the call in the normal fashion (e.g., and preferably, in direct mode). The apparatus preferably also operates to appropriately decode and/or decrypt call traffic before presenting it to a user, etc., where appropriate or necessary.

In these arrangements, the apparatus of the present invention could be configured to provide call information and/or traffic, etc., to its user (to its terminal function) for all calls that use it as a repeater and/or gateway. However, in a preferred embodiment, the apparatus can be, and preferably is, configured or configurable to do this for selected calls only. Such selection can preferably be and is preferably based on, for example, one or more of, the group address for the call, the destination address for the call, and/or the address (identity) of the source (originator) of the call. For example, the apparatus could determine the group address that call signalling passing through it as a gateway and/or repeater is addressed to, and if the group address is an address for which call participation (e.g. monitoring) is to be provided, then relay the call information and/or traffic to the user (to its terminal function), as well as providing the repeater and/or gateway function for the call.

It is preferably also or instead possible for a user to select to participate in (e.g. monitor) a call or not. This could be done, e.g., by an appropriate user input to the apparatus.

In the case of the user of the apparatus (or the terminal function of the apparatus) transmitting during a call that is proceeding via the repeater and/or gateway function of the apparatus, or originating a call that is to proceed via the gateway and/or repeater function of the apparatus, then the signalling sent over the air interface or interfaces (in the case of gateway operation) by the gateway and/or repeater function of the apparatus will be similar to, or substantially the same as, signalling as would be generated if the signalling had been initiated by a terminal connected to the gateway and/or repeater function via an air interface.

In other words, the user action via the terminal function of the apparatus will cause the gateway and/or repeater function to generate similar or the same signalling that it would normally generate in response to signalling received on the normal communications system air interface(s), e.g., and preferably, so that even if it receives the signalling from the terminal part internally (e.g. from a "virtual" terminal), it will respond to that signalling on the air interface.

Thus, for example, in a preferred embodiment, the apparatus of the present invention has an address by which it can identify itself as a repeater and/or gateway to other DMO terminals and/or to other V+D terminals. This address may, for example, be the ISSI used by the terminal part of the apparatus when it is operation in direct mode or V+D mode. Additionally, the gateway or repeater or repeater/gateway is preferably commissioned with one or more group addresses which it uses for the reception and transmission of group calls.

Similarly, in the case of the user's call participation or initiation when the apparatus is functioning as a gateway, the apparatus will signal to the direct mode and fixed network air interfaces using similar or the same (as far as is appropriate) signalling (e.g. Protocol Data Units (PDUs) and u-plane traffic data in a TETRA system) as would be generated if the signalling had been initiated by a mobile station and/or a base station, as appropriate, connected to the gateway via an air interface.

In one arrangement, the apparatus signals to the direct mode and fixed network air interfaces using signalling (e.g. Protocol Data Units (PDUs) and u-plane traffic data in a TETRA system) as would be generated if the signalling had been initiated by a V+D ("fixed network") mobile station and/or a base station, as appropriate, connected to the gateway via an air interface.

In another arrangement the apparatus signals to the direct mode and fixed network air interfaces using signalling (e.g. Protocol Data Units (PDUs) and u-plane traffic data in a TETRA system) as would be generated if the signalling had been initiated by a DMO (direct mode) mobile station, as appropriate, connected to the gateway via an air interface.

In the case of the user's call participation or initiation when the apparatus is functioning as a repeater, the apparatus will signal to the (direct mode) air interface (to the slave link and/or master link, as appropriate) using similar or the same (so far as is appropriate) signalling (e.g. PDUs and u-plane traffic data in a TETRA system) as would be generated if the signalling had been initiated by a terminal connected to the repeater via the (direct mode) air interface (e.g., the opposing master link and/or slave link air interface, as appropriate), and/or signals to the (direct mode) air interface (to the slave link and/or master link, as appropriate) as if the signalling originated from another direct mode user (terminal).

Thus, when the user of the apparatus of the present invention wishes to transmit in an ongoing call or to initiate a call, or the terminal function of the apparatus is operating to transmit in an ongoing call or to initiate a call, the signalling to all the other participants in the call is as if the signalling had originated from a terminal that is connected to the apparatus by an available (e.g. by the appropriate) air interface (i.e. as if the signalling originated from another user operating via the repeater or via the gateway function, etc., of the apparatus as appropriate).

Thus, in the case of repeater operation and a user wishing to transmit within an ongoing call, the transmission (or pre-emption) request (which in all cases is preferably triggered by the user pressing their transmit (e.g. push-to-talk, PTT) key) is preferably sent on the repeater master link to the current master of the call, and the response monitored on the master link. Thereafter the setup signalling and traffic are preferably sent on the slave link to the destination group of terminals, preferably as if the signalling and traffic had been received by the repeater function on the master link.

Similarly, in the case of the user of the apparatus wishing to set up a new call via a repeater function of the apparatus (which again is preferably indicated by appropriate user operation of a transmit, etc., key of the apparatus), the signalling and traffic are correspondingly preferably sent to the called group of terminals using the repeater "slave" link, preferably as if signalling and traffic had been received by the repeater function on the master link. If necessary, a pre-emption request is preferably first sent on the master link to the current master of a call and the response monitored on the master link, before the new call is set up on the slave link.

In the case where the apparatus is functioning as a gateway, and a user wishes to transmit during an ongoing call that is proceeding via the gateway, or to set up a new call that is to use a gateway function of the apparatus, then preferably the apparatus sends a standard network (V+D) request to transmit (e.g. a transmit demand or setup request) to the fixed network (e.g. and preferably, to a switching and management infrastructure (SwMI) of the fixed network), and when the request is granted, then sends call set-up signalling to the direct mode (non-fixed network) terminals participating or to participate in the call. Traffic would then be transmitted in both directions (to the direct mode terminals and to the fixed network) simultaneously. In this case, there will be two sets of signalling (on the fixed network and in the direct mode "network").

In one particularly preferred embodiment for gateway operation, when the user of the gateway wishes to transmit a new call or in an ongoing call, the signalling to all the other participants in the call is preferably as if the signalling originated from another V+D (fixed) network user (terminal) operating via the gateway. This is preferably achieved in a TETRA system by linking or combining the functions of V+D mobile station call control and gateway layer 3 protocol conversion functions.

In this preferred embodiment, when the user wishes to set up a new call, the apparatus will request a call from the fixed network (SwMI), with no signalling over the direct mode air interface. When this request is granted, the apparatus preferably then signals the call set up to the direct mode destination address for the call as if the call set-up has originated from a terminal communicating via the fixed network (SwMI). The source address for this call set-up may be the identifier (e.g. ISSI in TETRA) used by the apparatus on the fixed network for this purpose. Traffic is then preferably transmitted by the apparatus to the direct mode destination address as if it had been received via the fixed network interface of the apparatus, and traffic is transmitted by the apparatus to the fixed network destination address as if it had received that traffic from a direct mode operating terminal.

Similarly, in this embodiment when the apparatus is functioning as a gateway and the user wishes to transmit within an ongoing call, there are again preferably two phases of signalling. Firstly, the apparatus preferably again requests permission to transmit from the fixed network (SwMI). Then, when this is granted, the apparatus preferably signals the call set up to the direct mode destination address (terminal) as if the granted transmission had originated from the fixed network (SwMI). Traffic is preferably then transmitted by the apparatus to the direct mode destination address as if it had been received by the fixed network interface of the apparatus, and traffic is transmitted by the apparatus to the fixed network destination address as if the apparatus had received that traffic from a direct mode terminal.

In another preferred embodiment where the apparatus is functioning as a gateway, when the user of the apparatus intends transmitting a new call or an ongoing call that is proceeding via the gateway function of the apparatus, the signalling to all of the participants in the call is as if the signalling originated from a direct mode terminal operating via the gateway part of the apparatus. This is achieved by linking the two functions at the layer 1 (physical layer), layer 2 (the data link layer) or layer 3 (DMO call control) level or any other layer of the existing communications system protocols.

In this arrangement, the apparatus could comprise, for example, as discussed above, a direct mode "terminal" and a gateway that are co-located in the same apparatus, and which, for example, share power, audio, display and other input and output devices (if desired).

In this embodiment, the signalling arrangements are preferably as follows.

When the apparatus is to set up a new call, the terminal part of the apparatus preferably first transmits a call request (for a via-gateway call) to the gateway part of the apparatus as if it were a direct mode terminal operating via that gateway. This transmission could be sent internally within the apparatus, etc., as discussed above.

The gateway function of the apparatus will then request a call from the fixed network (SwMI) as if it had received a direct mode call via a gateway request from a terminal. When this is granted, the gateway function of the apparatus preferably then signals the call set up completion to the terminal function internally within the apparatus, etc. (depending upon how the terminal function and gateway function are interconnected). The apparatus then transmits the final phase of the call set up to the direct mode destination address (terminals) via its terminal function (i.e. using the call set-up signalling that would normally be sent by a direct mode terminal that had requested a gateway call setup (or transmission)). The source' address for this call set-up is preferably the direct mode identifier of the apparatus.

Traffic can then be transmitted via the terminal function of the apparatus to the direct mode destination address as if it were being transmitted by a direct mode terminal operating via the gateway, and by the gateway function of the apparatus to the fixed network destination address as if the gateway function had received that traffic from a direct mode terminal.

It is also preferred for a similar arrangement to take place when the user wishes to transmit within an ongoing call proceeding via the gateway function of the apparatus.

Thus again, in this situation, the terminal function of the apparatus preferably first transmits a transmission request (addressed to the gateway function of the apparatus) as if it were a direct mode operating terminal. Again, this transmission request can be signalled internally within the apparatus, etc, as appropriate.

The gateway function of the apparatus preferably then requests permission to transmit from the fixed network (SwMI) as if it had received a transmission request from a direct mode terminal. When this is granted, the terminal function of the apparatus then signals the final phase of the call set-up to the direct mode destination address as if it were a direct mode terminal. Traffic is then transmitted by the terminal function to the direct mode destination address as if it were a direct mode terminal, and by the gateway function of the apparatus to the fixed network destination address as if that traffic had been received by the apparatus from a direct mode terminal.

It is particularly preferred in these embodiments of the invention that the signalling generated by the apparatus of the present invention maintains the perception of availability of the "gateway" function of the apparatus to other direct mode operating terminals, and/or ensures that other direct mode operating terminals use the correct via-gateway signalling mechanisms.

Thus, for example, the DMO terminal part of the apparatus when it has set up a call via the gateway part and then does the second stage of the call set-up direct to the other DMO terminals, preferably transmits signalling that is similar to the signalling used for a "via-gateway" call. Thus, it firstly preferably indicates a "via-gate" instead of a "direct" call, and/or includes the address of the gateway part that it is using in its signalling where appropriate (namely, ,in a TETRA system, preferably the short (10-bit) address of the gateway part, that is different from and additional to any individual (ISSI) or group (GSSI) 24-bit address that may be used).

Similarly, the apparatus, while it is sending traffic, preferably periodically sends occupation signalling to maintain the call and provide late entry call set-up information (which should also, accordingly, preferably indicate a "via-gate" call and include the "gateway" address).

The apparatus preferably also generates corresponding presence signals to the presence signals that a gateway would normally generate while receiving traffic from a DMO terminal operating via the gateway.

Furthermore, when the terminal part stops transmitting, then, preferably, the gateway part, rather than the direct mode terminal part, holds the channel in reservation (unlike in normal direct mode operation where the "terminal" would hold the channel in reservation) such that, for example, direct mode terminals requesting transmit permission have to send a gateway transmission request to the gateway part of the apparatus, rather than a normal transmission request to the DMO terminal part of the apparatus.

It is also preferred in these embodiments of the invention that even if the direct mode air interface is not needed or not being used for interconnection between the terminal part and gateway part of the apparatus, the apparatus is still able to transmit on the direct mode air interface, and, most preferably, at least able to transmit on the direct mode air interface signalling that would normally be received from a direct mode terminal and the signalling that would normally be transmitted to a direct mode terminal setting up a call via the gateway. This may be desirable for, for example, the sake of consistency.

In this arrangement, the apparatus preferably does not simultaneously transmit and receive over the direct mode air interface (so it is not connecting its terminal and gateway functions via RF transmission), but it is preferably able to transmit or receive in every timeslot, so it is still able to transmit signalling in the timeslots where it would either normally transmit signalling or normally receive signalling so as again to keep the appearance on the air interface the same as if there were a real direct mode operating terminal negotiating, for example, the first stage of call set-up.

It would again be possible in these arrangements where a user wishes to originate a call or to transmit in a call that is to use or using a repeater and/or gateway function of the apparatus, for the user to be able to do this for all calls that may use the repeater or gateway function of the apparatus. However, in a preferred embodiment, it is again preferred that such user operation is only permitted for particular, selected, and preferably predetermined calls, for example, and preferably, for calls to particular call groups, or destination addresses, and/or from particular source addresses (call originators).

The apparatus of, or for use in, the present invention can be any suitable such equipment. Thus it could, and preferably does, comprise a suitably configured and/or equipped terminal of the communications system. As discussed above, the apparatus should at least be capable of functioning as a repeater or as a gateway, and as a terminal for a user.

Thus, for example, it can preferably perform appropriate repeater and/or gateway call functions and signalling, and, for example, be able to control and set up the assignment of traffic channels to calls. For example, in the case of gateway operation, it should, for example, be capable of setting up and maintaining a direct mode call in response to an incoming fixed network call, and of receiving call requests from a direct mode operating terminal to establish a call in the fixed network and to then give a direct mode operating terminal the go-ahead to set up a direct mode call.

As discussed above, in a preferred embodiment, the apparatus of the present invention can operate in the same manner as known, existing gateway and/or repeater devices, save for in respect of its operation in accordance with the present invention. Thus, in a particularly preferred embodiment, the apparatus of or for use in the present invention comprises (a suitably equipped) gateway and/or repeater.

In a preferred embodiment, the apparatus of the present invention broadcasts a "presence" signal on the direct mode (non-fixed network) air interface, for example, and preferably, to indicate the existence of the apparatus (its repeater or gateway function) to direct mode operating terminals, and to provide a frequency and timing reference that is (in the case of gateway or repeater/gateway operation) derived from the frequency and timing of the fixed (V+D) network. This presence signal can be, and is preferably, e.g., generated at regular or irregular intervals, in order to maintain synchronisation to the fixed network (in the case of gateway and/or repeater/gateway operation) in advance of any call setup operations.

The apparatus of or for use in the present invention similarly preferably also includes means for or a step of broadcasting a presence signal in any event during an ongoing direct mode call that is using the apparatus, so as to, for example, maintain synchronisation, maintain the authorisation to use the apparatus and/or to provide ongoing feedback that the apparatus is receiving the terminal's transmissions, during the call. Thus, in a preferred embodiment, the apparatus is operable to and includes means for maintaining synchronisation between the fixed network and a terminal or terminals operating in direct mode, at least during an ongoing call that is proceeding via the apparatus' gateway function.

The apparatus of or for use in the present invention can also accordingly preferably act as a master reserving the direct mode channel during the "reservation" periods of a direct mode call that is using the (gateway function) of the apparatus (and accordingly then receive transmissions requests from terminals wishing to transmit in the call).

While the apparatus of or for use in the present invention in one preferred embodiment simply functions as a gateway or as a repeater or as a repeater/gateway (together with its operation in accordance with the present invention), in another particularly preferred embodiment, the apparatus can support and provide plural modes of operation as well as a gateway or repeater mode of operation in the manner of the present invention. For example, the apparatus could and preferably can operate as both a repeater and as a gateway (and/or as a repeater/gateway) (e.g. with its actual operation being determined in advance). Similarly, it could and preferably can also support one or more of standard gateway operation, standard repeater operation, standard repeater/gateway operation, direct mode operation, trunked mode (V+D mode) operation, and/or any other form of similar existing or future modes of operation. Thus, in a preferred embodiment, the apparatus of the present invention supports, and includes, the gateway and/or repeater operation in accordance with the present invention as one of a plurality of operating modes of the apparatus.

In a particularly preferred such embodiment, the apparatus of or for use in the present invention can operate as a gateway and/or as a repeater in the manner of the present invention, and as a "normal" gateway and/or repeater.

In a particularly preferred embodiment, the apparatus of the present invention can also function as a terminal, e.g., and preferably as a direct mode terminal, that can make "normal" terminal transmissions (i.e. not just via the repeater and/or gateway function of the apparatus). For example, and preferably, in one embodiment the apparatus supports both DMO terminal operation independent of the repeater or gateway functions, and terminal operation via the repeater and/or gateway function of the apparatus.

In a particularly preferred such embodiment, the apparatus supports both repeater operation, via-repeater operation and operation as a standard DMO terminal. This could then allow the apparatus to provide a normal DMO terminal service to its user, a DMO repeater service to other DMO terminals (users), and call participation via the repeater function in the manner of the present invention to the user of the apparatus.

In order to facilitate such operation, the apparatus can preferably use addressing details in received signalling to determine its behaviour. For example, and preferably, in response to addressing and/or signalling that indicate that the repeater's service is being used (e.g. "via-REP" signalling and the use of the repeater's address), the via-repeater mode of operation is used, but in other cases the repeater service is suspended (not maintained).

The apparatus can preferably also or instead simultaneously recognise its repeater address and one or more individual or group addresses. Most preferably, the apparatus is receptive to calls that match any of its addresses and is able to respond accordingly.

In such arrangements, a call or message that only matches the apparatus' repeater address is preferably repeated as for standard ETSI-defined repeater operation, whereas a call or message that matches both the apparatus' repeater address and one of its individual or group addresses can be and is preferably repeated and provided to a user for monitoring (and preferably may also be transmitted in by the user, etc.). Similarly, a call or message that matches one of the apparatus' individual or group addresses and is signalled as a direct call not using its repeater service is preferably received and participated in as a standard direct call. Similarly, a call or message preferably can be received from another repeater, or from a gateway, or from a repeater/gateway, or from a DMO terminal operating via a gateway, as for existing ETSI-defined behaviour for DMO terminals.

In these arrangements where the apparatus can operate in various different modes, then the mode of operation of the apparatus (e.g. for any given call) can be selected and set in any suitable and desired manner. For example, the apparatus could be configured (customised) before use to operate in the desired manner.

Preferably the mode of operation (e.g. as a gateway) and/or the conditions determining the mode of operation is or are previously agreed and/or known or selectable to users, so that users know the operating conditions to expect for their calls.

In a particularly preferred embodiment, the operating mode of the apparatus can be set and changed in use, i.e. the invention includes means for or a step of selecting the operating mode of the apparatus in use. Such selection can be carried out as desired, but in a preferred embodiment can be carried out by one or more of, and preferably by all of, customisation, user operation (such as user-selection via a user interface of the apparatus), control via a control interface (such as a wired or wireless remote control interface) of the apparatus, and/or over-the-air signalling (e.g. from a controller of the communications system). In the case of the use of over-the-air signalling, such signalling can preferably be on either the direct mode air interface or the fixed network (V+D) air interface, and preferably can, e.g., be by means of short data messages (such as SDS messages in TETRA).

In a particularly preferred embodiment of these arrangements of the present invention, it is also or instead possible for the apparatus to be able to, and to, select and set its mode of operation automatically in use. In this case, the apparatus preferably determines or comprises means for determining the mode of operation to operate in based on one or more particular, preferably predetermined, conditions or criteria.

For example, and preferably, the mode of operation to use can be, and is preferably, based on one or more of and preferably all of: the talk group using the apparatus (such that, for example, selecting DMO group A on the apparatus results in standard, e.g., gateway operation, whilst selecting DMO group B on the apparatus results in, e.g., gateway operation in the manner of the present invention), and/or the source and/or destination address or addresses specified in a call to be set up via the apparatus (such that, for example, a call addressed to DMO call group B would be handled as an e.g., gateway call in the manner of the present invention, whereas a call addressed to DMO call group A is handled as a standard, e.g., gateway call, and/or a call originated by a mobile terminal B is handled as an, e.g., gateway call in the manner of the present invention, whereas a call originated by a different mobile terminal,A is handled as a standard, e.g., gateway call).

Thus, in a particularly preferred embodiment, a particular mode or modes of operation of the apparatus is associated with particular users, such as particular, selected, preferably predetermined, call groups, destination addresses and/or source addresses. Most preferably, gateway and/or repeater operation'in the manner of the present invention is associated with particular call groups, destination addresses and/or source addresses, and standard gateway and/or repeater operation is associated with other call groups, destination addresses and/or source addresses.

It would also or instead be possible to, for example, select the mode of operation based on a priority level for a call. For example, and preferably, lower priority calls could trigger gateway and/or repeater operation in the manner of the present invention, whilst higher priority direct mode calls could be treated as standard gateway and/or repeater calls or vice-versa. Thus, in a preferred embodiment, operation of the apparatus in the manner of the present invention is associated with a particular call priority level or levels (which, e.g., can be indicated in use, e.g., when the call is requested), and "standard" gateway and/or repeater operation is associated with another call priority level or levels.

Other arrangements for determining the mode of operation in use would, of course, be possible.

The apparatus of the present invention can be constructed as desired. Thus it could, in the case of a gateway arrangement, for example, comprise two separate radio transceiver units, one for communicating with the direct mode operating terminals, and one for communicating on the fixed network (V+D) side, or a single transceiver that can switch between the two could be used.

In the latter arrangement, in the case of a TETRA system, timeslot 1 in the DMO transmissions is preferably delayed by 3 timeslots relative to the fixed network (V+D) downlink slot that the apparatus is monitoring for control channel signalling, for this purpose.

It may also in these arrangements be necessary for the apparatus to re-align its timing with a traffic channel allocated to an incoming fixed network call, when a fixed network call is received, for example if the traffic channel is on a different timeslot to the timeslot that was being used by the fixed network control channel that the apparatus was monitoring.

If the timing does need to be re-aligned in this way, the apparatus preferably first instructs any direct mode operating terminals to cease transmitting using its existing timing and then adjusts the timing once it has determined that existing direct mode transmissions have ceased. This helps to ensure that the direct mode channel is freed of activity and that all the direct mode operating terminals can properly receive the new call. The timing adjustment can be carried out in any suitable and desired manner, for example, and preferably, by using timing adjustment signalling that has already been specified for the communications system in question.

In a preferred embodiment, the operation, behaviour, etc., of the apparatus of the present invention can be modified or changed in use, for example, and preferably, by one or more of customisation, remote control (e.g. by wired or wireless control), user-interface action, and/or by signalling over the direct mode and/or fixed network (V+D) air interfaces, etc..

The present invention can be used with any appropriate type of call, such as circuit mode calls, and voice or data calls or transmissions. Furthermore, although the present invention has been described above with particular reference to the operation of the apparatus in respect of calls, it would also be possible and is preferably possible for the apparatus to operate in a similar manner with respect to short messages, such as text or data messages (such as SDS messages in a TETRA system).

In the case of short messages, unlike circuit mode voice calls, the via-gateway process where the apparatus is functioning as a gateway, for example, would preferably not have a two-stage set-up followed by traffic, but be comprised of a single stage on each air interface. For example, and preferably, the direct mode terminal part would send the short message to the gateway part, and the gateway part would send the short message to users on the fixed network or vice-versa.

In the case of repeater operation, the sending of a short message could, for example, be similar to call set-up, but with a known finite length.

Thus, in a particularly preferred embodiment, the apparatus of the present invention can operate in a similar manner in respect of short messages, such as SDS messages, for example and preferably for any applications such as, for example, status reporting, text messaging, location reporting, apparatus control, etc.. In this case, the user of the apparatus (of the terminal function of the apparatus), or an internal function of the apparatus or an external function connected to the apparatus by any means, would be able to send and/or receive a short message via the gateway and/or repeater function of the apparatus, as appropriate.

It should be noted here that, as is known in the art, the sending of some short messages, such as SDS messages, does not necessarily involve a user, but the messages could instead or also come from or go to an external application controlling the (terminal part) of the apparatus remotely, and/or could also instead be internally generated messages (e.g. GPS location reports) and/or internally received messages (e.g. over-the-air SDS messages to control the operation of the terminal part of the apparatus). Thus in these arrangements where the apparatus of the present invention can also handle short messages in the manner of the present invention, it should be understood that references to a user sending or receiving a short message, should, where appropriate, also be understood to include arrangements in which external applications send or receive messages and/or messages are internally generated or consumed.

Thus, in a preferred embodiment, the method and apparatus of the present invention preferably further comprise a step of, or means for allowing a user, an internal function or application and/or an external function or application of the apparatus to send and/or receive a short message for which the apparatus is providing and/or is to provide a repeater and/or gateway function.

As will be appreciated by those skilled in the art, these embodiments of the invention can and preferably do include any one or more or all of the preferred and optional features of the invention described herein, as appropriate. Thus, for example, the external application or function of the apparatus preferably comprises an external application that can control the terminal function or part of the apparatus remotely, and the apparatus is preferably providing a repeater function.

In a preferred embodiment of the invention, the apparatus can both support user
participation in a call for which the apparatus is providing and/or is to provide a repeater and/or gateway function, and also some other function or application that is sending and/or receiving messages for which the apparatus is providing and/or is to provide a repeater and/or gateway function, preferably in addition to or instead of the user sending and receiving messages. For example, a user (particularly a covert user) might participate in calls while his terminal (acting as a repeater) is simultaneously automatically sending GPS location reports via itself as repeater, and, for example, receiving, monitoring and acting upon control messages sent via itself as a repeater.

As will be appreciated by those skilled in the art, when the apparatus or method of the present invention is providing a gateway function for a call (is to relay a call, etc., from one network side (air interface) to the other network side (air interface)), then the call may be relayed by the gateway function to a terminal or terminals on the direct mode network (or on the fixed network, as appropriate) by the apparatus (the gateway function) as desired.

In a preferred embodiment, the apparatus of the present invention can deliver incoming calls, etc., that originate on one network (on one air interface) (e.g. the fixed network) to the other network (to the other air interface) (e.g. to direct mode operating recipient(s) (terminal(s)) in a number of different ways. For example, the apparatus can preferably receive calls from the fixed network addressed to an address corresponding to a direct mode operating group address and/or to an address corresponding to an individual direct mode operating terminal address, and is able in response thereto to relay the call into the direct mode "network" accordingly (and vice-versa, from the direct mode network to the fixed network).

In these cases, the address used "in" the, e.g., fixed network call could be the same as the direct mode address, or a different address (e.g. where address translation between fixed network and direct mode address is used), as is known in the art), and/or addressed to the gateway's own individual address.

It is preferably also or instead possible for the apparatus to be configured to always re-transmit calls from one network (e.g. the fixed network) to a particular, preferably predetermined, address (group or individual) on the other network (e.g. direct mode (non-fixed network) side). The apparatus could be configured to do this for all calls from the first network (from the first air interface) (e.g., and preferably, the fixed network side), or only for selected such calls (e.g. such calls to and/or from a particular, selected address or addresses).

Thus, in a preferred embodiment of the present invention, the apparatus can receive a call from one (e.g. the fixed) network (air interface) on an individual or group address, can retransmit the call on the other (e.g. non-fixed) network side (air interface side) of the gateway to an individual or group address, and/or can translate an address used on the one network side to an associated (corresponding) address for use on the other network side of the gateway.

Most preferably, the apparatus can relay a call for which it is intended to provide a gateway function, preferably selectively, e.g., depending on the call address or group, either to plural terminals (e.g. to plural direct mode operating terminals) or to a single terminal, e.g., and preferably, irrespective of whether the call is initially addressed to plural terminals or not. Relaying the call to a single terminal may be desirable where, for example, it is desired to relay calls to, e.g., a commander of a group operating in direct mode, but not to all users operating in direct mode.

In a particularly preferred such embodiment, the apparatus can be, and preferably is, configured to, or includes means for, when it receives a call that it would otherwise relay to the other air interface (receives a call intended to be relayed to the other side of the "gateway"), relaying that call solely to its own terminal function, i.e. such that the user of the apparatus can receive and participate in the call, but the call is not otherwise relayed via the gateway function of the apparatus to another terminal. Thus, in a particularly preferred embodiment, the present invention includes means for or steps of, when a call that is (intended) to use the gateway function of the apparatus is received, relaying that call to the terminal function of the apparatus, but not otherwise relaying that call to another terminal via the apparatus.

In other words, in this operation a call received from one network, e.g., the fixed network, that would normally be relayed to the other network (to the other air interface) is not retransmitted on the other network, e.g., on the direct mode channel, but is received by the apparatus and presented to the user (to the terminal function) of the apparatus.

This would have the effect that, for example, an incoming call from the fixed network (the V+D) side would be received by the apparatus, but instead of, as would be the case in "normal" gateway operation, relaying that call to one or more terminals on the direct mode network, the call is relayed only to the terminal function of the apparatus, and is not relayed to terminals operating on the direct mode network. This has the benefit that the user of the apparatus can be a user on the direct mode network that is able to receive the call from the fixed network, but the arrangement still leaves the direct mode network channel free for use by the direct mode users (i.e. the call from the fixed network does not occupy the direct mode channel). This may, for example, avoid unnecessary use of the direct mode radio channel when in fact it is only desired that a single user on the direct mode network is able to receive calls from the fixed network.

Similarly, in the case of a via-gateway call coming from the direct mode side (made by a direct mode terminal), again if that call is relayed solely to the terminal function of the apparatus, there would not then be a corresponding fixed mode network call for relaying the call traffic to the fixed network, thereby again saving on fixed network resources, but still allowing a user who is able to communicate with the fixed network (namely the user of the apparatus) to receive the call.

Preferably in these arrangements, any call establishment or set-up signalling, etc., on the network (the air interface) to which the call would normally be relayed by the gateway function is omitted as well, i.e. such that when the call is received, the call is simply relayed to the terminal function of the apparatus, and there is no call establishment or call set-up signalling on the other network (the other air interface).

In these arrangements, as discussed above, the signalling to the call requesting terminal and/or to those terminals that are participating in the call, will be the same as or similar to, as far as possible, the signalling that they would receive as if the call were being relayed normally into the corresponding network, so that so far as those terminals are concerned the call operation seems to, and can, proceed as normal.

In these arrangements, the call may be relayed to the terminal function of the apparatus as desired. For example, it may be, and preferably is, relayed via the local connection (interface) between the gateway function of the apparatus and the terminal function of the apparatus, for example over a wired and/or logical interconnection, as discussed above. This may avoid the need for there to be any call set-up signalling from the gateway function of the apparatus for relaying the call to its terminal function.

As will be appreciated by those skilled in the art, these arrangements can equally apply in the case of short messages. Thus, for example, in a preferred embodiment, the apparatus is operable such that if it receives a short message (or any other communication) that is intended to be relayed through the gateway to the other network, then it can and preferably does send that short message (or communication) to the terminal function of the apparatus itself, and does not relay it to other terminals that are operating on the corresponding other network.

It is similarly preferred that operation in this manner (namely solely relaying a communication (a call or short message) to the terminal function of the apparatus) can be configured and/or triggered selectively, preferably in use. Preferably such selection or configuration can be carried out and/or based on any of the various criteria discussed above for selecting and determining the mode of operation of the apparatus, such as at least one of, and preferably one or more of: the group address for the call or short message, the destination address for the call or short message, the identity of the originator of the call or short message, a user input to the apparatus, and/or a priority level associated with the call or short message.

As will be appreciated by those skilled in the art, these embodiments of the invention can and preferably do include any one or more or all of the preferred and optional features of the present invention described herein.

Thus, for example, the call traffic or short message is preferably relayed to the terminal function of the apparatus via a short range, local connection, preferably a wired and preferably a logical interface. Similarly, there is preferably no transmission over an air interface on the other network side (i.e. the gateway apparatus does not retransmit the received call or short message over an air interface on the other network side (the non-call-originating network side) of the gateway at all).

In a particularly preferred embodiment, the apparatus and method of these embodiments of the invention is operable, and preferably at least operable, in this manner in respect of calls or short messages that originate from the fixed network.

Thus, in a particularly preferred embodiment, the apparatus or method includes means for or steps of:
receiving call traffic and/or a short message transmitted from the fixed network infrastructure and retransmitting that call traffic to a terminal or terminals without that transmission passing via the fixed network infrastructure; and
in response to receiving a request that has been transmitted via the fixed network infrastructure from a terminal to relay call traffic or a short message that is transmitted via the fixed network infrastructure to one or more terminals without the communication passing via the network infrastructure, providing the call traffic or short message to the terminal function means of the apparatus and not relaying the call traffic or short message to any other terminal which is operating in a direct mode of operation (i.e. communicating with the gateway apparatus independently of the fixed network infrastructure).

Similarly, in a preferred embodiment the apparatus and method can preferably also or instead, and preferably also, operate in a similar manner in respect of calls or short messages received from the direct mode network for retransmission to the fixed network.

Thus, in a preferred embodiment, the gateway apparatus or method includes steps of or means for:
receiving call traffic and/or a short message transmitted from a terminal or terminals without that transmission passing via the fixed network infrastructure and retransmitting that call traffic and/or short message to a terminal or terminals via the fixed network infrastructure; and
in response to receiving a request that has not been transmitted via the fixed network infrastructure from a terminal to relay call traffic or a short message that is not transmitted via the fixed network infrastructure to one or more terminals via the network infrastructure, providing the call traffic or short message to the terminal function means of the apparatus and not relaying the call traffic or short message to any other terminal via the fixed network infrastructure.

It should be noted here that the references in the above aspects and arrangements of the present invention, and elsewhere, to a call; communications traffic, a short message, etc., that is "intended" to be transmitted or relayed by the gateway function of the apparatus is intended to denote a communication, such as a call or short message, that is sent by the sender as if it should be, and/or as indicating to the system that it should be, transmitted or relayed by the apparatus to the other network side (air interface) of the "gateway", for example that is sent as an appropriate "via-gateway" communication. (In other words, such that under "normal" gateway operation (and in the absence of operation in the manner of the present embodiments), the call or short message, etc., would be (attempted to be) relayed to the other network (to the other air interface).)

The present invention can be used with any suitable and desired communications terminals, such as, and preferably, mobile terminals (mobile stations) of a mobile communications system. Such terminals may, e.g., be portable or, e.g., vehicle mounted, etc., as is known in the art.

The various processes, etc., of the present invention to be carried out in or by the system infrastructure, apparatus, terminals, etc., can be performed in any suitable and desired components of the system infrastructure and/or of a communications terminal or terminals, etc..

The communications system to which the present invention is applied can be any suitable such system. The present invention is particularly applicable to mobile communication systems, such as the TETRA system. Thus the present invention also extends to a mobile communications system and a method of operating a mobile communications system, that is in accordance with and/or that can be operated in accordance with, the present invention. The mobile communications system is preferably a TETRA system.

It should be noted here that although in a preferred embodiment the apparatus and method of the present invention is used in a communications system in which terminals of the system can communicate with each other via a network infrastructure of the system and in a direct mode of operation in which terminals can communicate with each other without the communication passing via the network infrastructure, it would also be possible to use the methods and apparatus of the present invention in, for example, a communications system in which terminals of the system only communicate with each other in a direct mode of operation (i.e. without the communication passing via a network infrastructure). This could be the case where, for example, the apparatus of the present invention is providing a direct mode operation repeater function, since in that case there could be a system that includes direct mode operation terminals and a repeater apparatus in accordance with the present invention, but such a system would not necessarily have, or have to have, any capability to communicate via a network infrastructure.

Thus, in one preferred embodiment the apparatus and method of the present invention are for use in a communications system in which terminals of the system can communicate with each other via a network infrastructure of the system and in a direct mode of operation in which the terminals can communicate with each other without the communication passing via the network infrastructure, but in another preferred embodiment the apparatus and method are for use in a communications system in which terminals of the system can only, and/or only, communicate with each other in a direct mode of operation in which terminals communicate with each other without the communication passing via a network infrastructure.

As will be appreciated from the above, the signalling that is sent to other terminals, etc., of the communications system by the apparatus of the present invention when the user of the present invention wishes to participate in a call via the repeater and/or gateway function of the apparatus is the same or similar to the signalling the terminals would expect to see for normal gateway and/or repeater operation. This allows the other terminals to maintain their perception that the repeater and/or gateway function is continuing, and thereby allows the apparatus of the present invention to maintain the gateway and/or repeater service to those other terminals, even while the user of the apparatus is participating in the call.

As will be appreciated by those skilled in the art, these embodiments of the present invention can and preferably do include, as appropriate, any one or more or all of the preferred and optional features of the invention described herein.

As will be appreciated by those skilled in the art references herein to attempting to establish a call, to setting up a call, to relaying call traffic, etc., are intended to refer to the process of attempting a call, etc., as appropriate, and do not necessarily require that a call is always successfully established, traffic is successfully retransmitted, etc., (although that is the aim and in practice will commonly be the outcome).

Similarly, references to the "fixed network" and/or "network infrastructure", etc., of the communications system are intended, unless the context otherwise requires, simply to indicate a distinction or contrast with communications that do not pass via the network of the communications system (i.e. direct mode communication). In essence, references to communications on or via the fixed network and/or network infrastructure, etc., are intended to indicate communications that use or consume network resources, such as traffic channels, but do not otherwise require there to be any particular form of infrastructure, or network, nor for the infrastructure to necessarily be physically "fixed".

Thus, for example, although in the normal course the network infrastructure of a communications system will typically comprise (and in a preferred embodiment. does comprise) plural base sites or stations, that are, e.g., fixed in their location, the present invention is equally applicable to and is intended to be equally applicable to, "network" arrangements comprising, e.g., a single base station not connected to any other infrastructure, a single base station temporarily disconnected from the network infrastructure (and operating, e.g., in a "fallback" mode), and/or a base station or base stations that may be or are movable and/or temporary. References to the fixed network, or to the network infrastructure, etc., should be interpreted accordingly, unless the context otherwise requires.

Similarly, the fixed network, network infrastructure is preferably a trunked system, and preferably supports voice and data (V+D) communications.

In the case of a TETRA system, references to the fixed network and to the network infrastructure are accordingly intended, unless the context otherwise requires, to refer to the TETRA V+D network and/or to TETRA trunked mode operation.

Similarly, references herein to direct mode operation, operation independent of the fixed network, etc., transmission, etc., that does not pass via the fixed network, are intended to refer to communications that do not pass via the "fixed" network, i.e. that are not dependent on the allocation of, and that proceed independently of, resources of the fixed network (although they may still, e.g., derive frequency and timing synchronisation from the fixed network). Thus, again, references herein to direct mode operation, etc., should be interpreted accordingly unless the context otherwise requires. Similarly, in the case of a TETRA system these references are intended to refer to TETRA direct mode operation (DMO).

It should also accordingly be noted that references herein to the apparatus providing a repeater and/or gateway function or service, etc., are intended to refer, unless the context otherwise requires, to the apparatus providing and/or supporting a repeater and/or gateway function or service that is (at least) in accordance with existing and known, "standard" or "normal", repeater and/or gateway functions and operation, such as is defined in the TETRA standards (rather than, for example, referring to the new and inventive repeater and/or gateway arrangements that the present invention provides). In other words, where it is referred in the present invention to the apparatus of the present invention as providing a repeater and/or gateway function or service, this is intended to indicate an ability to provide a function or service that corresponds to the known and standard repeater and/or gateway functions and operation of the communications system in question (since the apparatus of the present invention is defined as comprising further means or arrangements to allow it to operate in the manner of the present invention), unless the context otherwise requires.

As will be appreciated by those skilled in the art, all of the aspects and embodiments of the present invention described herein can and preferably do include, as appropriate, any one or more or all of the preferred and optional features of the invention described herein.

The methods in accordance with the present invention may be implemented at least partially using software e.g. computer programs. It will thus be seen that embodiments of the present invention comprise computer software specifically adapted to carry out the method or a method herein described when installed on data processing means, a computer program element comprising computer software code portions for performing the method or a method herein described when the program element is run on data processing means, and a computer program comprising code means adapted to perform all the steps of a method or of the methods herein described when the program is run on a data-processing system. The invention also extends to a computer software carrier comprising such software which when used to operate a communications system or apparatus comprising data processing means causes in conjunction with said data processing means said system or apparatus to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software and thus embodiments of the present invention comprise computer software and such software installed on a computer software carrier for carrying out at least one of the steps of the methods set out herein.

The present invention may accordingly suitably be embodied as a computer program product for use with a computer system. Such an implementation may comprise a series of computer readable instructions either fixed on a tangible medium, such as a computer readable medium, for example, diskette, CD-ROM, ROM, or hard disk, or transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example; shrink-wrapped software, pre-loaded with a computer system, for example, on a system ROM or fixed disk, or distributed from a server or electronic bulletin board over a network, for example, the Internet or World Wide Web.

A number of preferred embodiments of the present invention will now be described by way of example only, and with reference to the accompanying drawings, in which:
Figure 1 shows schematically repeater operation in a TETRA system;
Figure 2 shows schematically gateway operation in a TETRA system;
Figure 3 shows schematically signalling used during standard gateway operation in a TETRA system;
Figure 4 shows schematically an embodiment of gateway operation that is in accordance with the present invention;
Figure 5 shows schematically an embodiment of a repeater arrangement that is in accordance with the present invention;
Figure 6 shows schematically a first embodiment of signalling for call set-up, change over and release operation for a gateway arrangement that is in accordance with the present invention;
Figure 7 shows schematically a second embodiment of signalling for call set-up, change over and release operation for a gateway arrangement that is in accordance with the present invention;
Figure 8 shows schematically the International Standards Organisation Open System Interface (ISO OSI) layered model for a standard TETRA gateway;
Figure 9 shows a first embodiment of an ISO OSI layered model for a gateway apparatus arrangement that is capable of operating in the manner of the present invention;
Figure 10 shows a second embodiment of an ISO OSI layered model for a gateway apparatus that is capable of operating in accordance with this invention;
Figure 11 shows a third embodiment of an ISO OSI layered model for a .gateway apparatus that can operate in accordance with the present invention;
Figure 12 shows another embodiment of an ISO OSI layered model for a gateway apparatus that can operate in accordance with the present invention;
Figure 13 shows another embodiment of an ISO OSI layered model for a gateway apparatus that can operate in accordance with the present invention;
Figure 14 shows another embodiment of an ISO OSI layered model for a gateway apparatus that can operate in accordance with the present invention;
Figure 15 shows the ISO OSI layered model for a standard TETRA repeater;
Figure 16 shows an embodiment of an ISO OSI layered model for a repeater apparatus that is capable of operating in accordance with the present invention;
Figure 17 shows a second embodiment of an ISO OSI layered model for a repeater apparatus that is capable of operating in accordance with the present invention;
Figure 18 shows schematically the construction of one embodiment of a gateway apparatus that can operate in accordance with the present invention;
Figure 19 shows schematically the construction of a second embodiment of a gateway apparatus that can operate in accordance with the present invention;
Figure 20 shows schematically the construction of a third embodiment of a gateway apparatus that can operate in accordance with the present invention;
Figure 21 shows a message sequence for pre-emption of a gateway apparatus during an ongoing call in accordance with a first preferred such embodiment of the present invention;
Figure 22 shows a message sequence for pre-emption of a transmitting direct mode operation mobile station by a gateway during an ongoing call in accordance with a first preferred such embodiment of the present invention;
Figure 23 shows a message sequence for pre-emption of a transmitting gateway during an ongoing call in accordance with a second preferred such embodiment of the present invention;
Figure 24 shows a message sequence for pre-emption of a transmitting direct mode mobile station by a gateway during an ongoing call in accordance with a second preferred such embodiment of the present invention;
Figure 25 shows a message sequence for pre-emption of a transmitting gateway for a new call in accordance with a first preferred such embodiment of the present invention;
Figure 26 shows a message sequence for pre-emption of a transmitting direct mode mobile station by a gateway for a new call in accordance with a first preferred such embodiment of the present invention;
Figure 27 shows a message sequence for pre-emption of a transmitting gateway for a new call in accordance with a second preferred such embodiment of the present invention;
Figure 28 shows a message sequence for pre-emption of a transmitting direct mode mobile station by a gateway for a new call in accordance with a second preferred such embodiment of the present invention;
Figure 29 shows a message sequence for pre-emption of a transmitting repeater during an ongoing call in accordance with an embodiment of the present invention;
Figure 30 shows a message sequence for pre-emption by a repeater of a transmitting direct mode mobile station during an ongoing call in accordance with an embodiment of the present invention;
Figure 31 shows a message sequence for pre-emption of a transmitting repeater for a new call in accordance with an embodiment of the present invention;
Figure 32 shows a message sequence for pre-emption by a repeater of a transmitting direct mode mobile station for a new call in accordance with an embodiment of the present invention;
Figure 33 shows schematically typical call set-up, changeover and release signalling for standard TETRA repeater operation; and
Figure 34 shows schematically an embodiment of call set-up, changeover and release signalling for a repeater apparatus that can operate in accordance with the present invention.

The preferred embodiments of the invention will be described with particular reference to a TETRA mobile communications system. However, as discussed above, while the present invention is particularly applicable to TETRA mobile communications systems, as will be appreciated by those skilled in the art, it is not exclusive to those systems and can be applied to other mobile communications systems and communications systems equally.

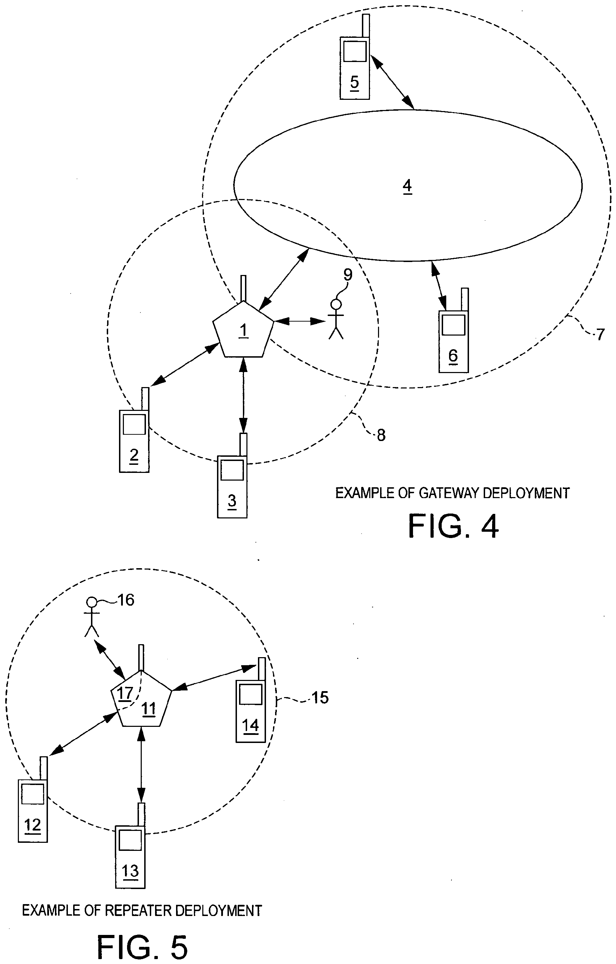

Figure 4 shows an embodiment of a gateway arrangement that can operate in accordance with the present invention.

In the arrangement shown in Figure 4, the fixed infrastructure, TETRA V+D (voice+data) radio interface 4 extends as far as a boundary 7. There is then also provided communications apparatus 1 which in the present embodiment is in the form of a "gateway" apparatus that can operate in the manner of the present invention.

This gateway apparatus 1 comprises radio equipment that is able to operate on both the TETRA V+D air interface and the TETRA direct mode operation (DMO) air interface, either simultaneously or quasi-simultaneously, and provides TETRA DMO air interface coverage within the boundary 8.

The gateway apparatus 1 can in this embodiment send and receive call traffic and SDS messages via radio signals with the fixed radio infrastructure 4 on the one hand, and can send and receive call traffic and SDS messages via radio signals with one or more direct mode operating terminals 2 and 3, etc., on the other hand. However, it is, in accordance with the present invention, configured to be operable such that while it provides a gateway function to appropriate direct mode operating terminals, it can also allow a user 9 of the gateway apparatus 1 to participate in a call, etc., that is proceeding via the gateway apparatus 1.

Thus, for example, if a TETRA terminal 2 that is outside the TETRA V+D air interface coverage sets up a circuit mode voice or data call with the gateway apparatus 1 and the TETRA terminal 3, then in contrast to standard TETRA gateway operation, the gateway apparatus 1 of the present embodiment will also allow a user 9 of the gateway apparatus 1 to participate in the call.

The participation by the user 9 in a call that is proceeding via the gateway apparatus 1 in this embodiment supported by the gateway apparatus 1 comprises allowing the user 9 to monitor the call information and call traffic of a call proceeding via the gateway apparatus 1, and allowing the user 9 to transmit within a call that is proceeding via the gateway apparatus 1, and to initiate a call that is to proceed via the gateway apparatus 1.

Examples of the actual operation of the gateway apparatus 1 when setting up calls, etc., in this embodiment of the present invention will now be described.

In the present embodiment, the gateway apparatus 1 operates according to and uses so far as is possible the signalling, etc., that is already defined in the TETRA standards for establishing calls, etc. via a gateway. This helps to ensure that the gateway apparatus 1 is compatible with existing TETRA radio equipment, and does not require changes to the behaviour of such existing equipment.

Thus, for example, the gateway apparatus 1 of the present embodiment is configured to appear to the direct mode operating terminals 2 and 3 to provide the same operation on the DMO air interface as a standard TETRA gateway, so that the DMO terminals 2 and 3 will perceive that they set up and receive calls via the gateway apparatus 1 as normal.

In the case of the user 9 monitoring call information and call traffic passing via the gateway function of the gateway apparatus 1, the gateway apparatus 1 is configured such that if the signalling passing through the gateway apparatus 1 is addressed to a group or individual address which the gateway apparatus 1 is configured to recognise as an address for which it may monitor a call, it will, in addition to its normal gateway function, report call information to the user 9 and decode and decrypt any circuit mode traffic and present this to the user, as if the user had been receiving the call in direct mode.

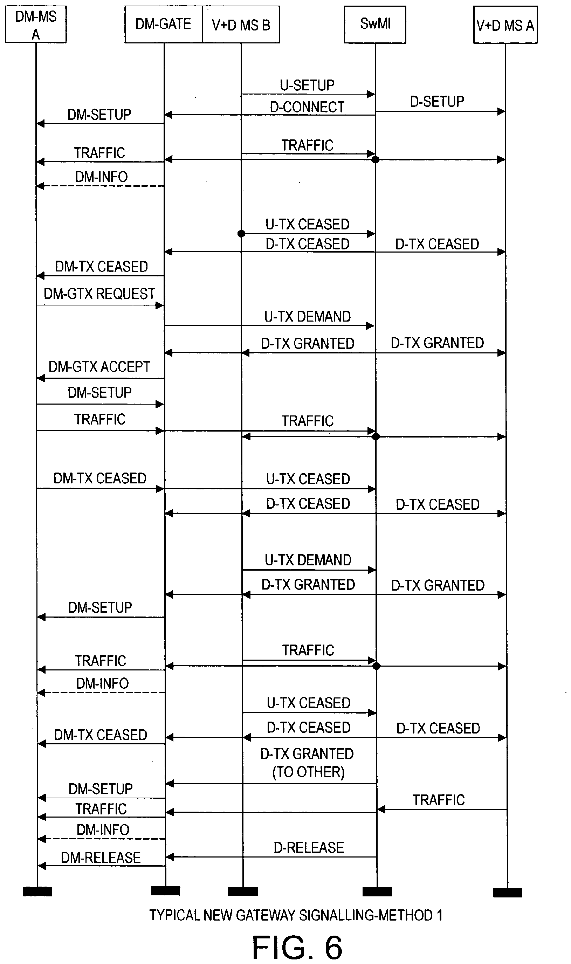

Figure 6 shows one embodiment of signalling for setting up calls, etc., via the gateway apparatus 1 in this embodiment of the present invention.

It is assumed that prior to the signalling shown in Figure 6, the gateway part (DM-GATE in Figure 6) of the gateway apparatus 1 has registered with the V+D network 4 switching and management infrastructure (SwMI) and is monitoring a control channel transmitted by the fixed network 4 SwMI.

The gateway (DM-GATE) is also assumed to be generating (transmitting) occasional Presence Signals to provide a frequency and timing reference to the DMO terminals 2 and 3 (DM-MS A and DM-MS B) and to inform those terminals of the gateway apparatus' availability. The gateway apparatus 1 may also transmit presence signals during a call to maintain the links between the apparatus and the terminals in the call.

In this embodiment of the gateway apparatus' 1 operation, when the user 9 of the gateway apparatus 1 intends to transmit a new call or in an ongoing call, the signalling to all the other participants in the call is as if the signalling originated from another V+D user operating via the gateway apparatus 1. This is achieved by linking or combining the functions of V+D mobile station call control and gateway layer 3 protocol conversion functions.

In Figure 6, DM-MS A is DMO terminal using the services of the gateway part (DM-GATE) of the apparatus 1. V+D-MS A is a V+D terminal that is using the services of a SwMI to communicate with DMO MSs (including DM-MS A) via the gateway (DM-GATE) part of the apparatus 1. V+D-MS B is a V+D "terminal" that comprises (and represents) the "terminal" part of the gateway apparatus 1.

In this embodiment, V+D MS B of the gateway apparatus 1 may be co-located with the gateway part DM-GATE in one unit or in a plurality of units that may be interconnected by any means, e.g. wired or wireless, such that a user has access to both V+D MS B and DM-GATE. The interconnection between V+D MS B and DM-GATE may involve standard TETRA radio transmissions or any other form of wireless or wired connection that may or may not in some way replicate the TETRA signalling and traffic.

In a preferred embodiment, the functions of V+D MS B and DM-GATE are logically combined in one or more units such that the user has a common interface to both functions.

In a particularly preferred embodiment, the functions of V+D MS B and DM-GATE are combined in a common unit such that there is no necessity for V+D MS B and DM-GATE to exchange signalling and traffic over any kind of air interface, thus eliminating hardware associated with radio transmission and reception. In this preferred embodiment, the terminal V+D MS B would, in effect, be a 'virtual' V+D terminal incorporated within the gateway part DM-GATE such that DM-GATE is able to transmit to DM-MS A and/or V+D MS A via a SwMI substantially the same signalling and traffic that DM-MS A and/or V+D MS A via a SwMI would receive from DM-GATE if V+D MS B were a real V+D terminal transmitting to DM-MS A via DM-GATE and/or V+D MS A via a SwMI; similarly, DM-GATE is able to receive from DM-MS A and/or V+D MS A via a SwMI substantially the same signalling and traffic that DM-MS A and/or V+D MS A via a SwMI would transmit to DM-GATE if V+D MS B were a real V+D terminal receiving from DM-MS A and/or V+D MS A via a SwMI.

In this embodiment, the signalling and traffic that other DMO terminals and a SwMI receive from or transmit to the gateway apparatus 1 DM-GATE are similar to the signalling and traffic that these other DMO terminals and SwMI would receive or transmit if the terminal part V+D MS B of the gateway apparatus 1 were a real V+D terminal operating via a SwMI and DM-GATE, thus maintaining compatibility with existing terminal behaviour.

In order to do this, the gateway apparatus DM-GATE has an address associated with the V+D terminal part V+D-MS B that it includes as the source address in transmitted signalling and recognises as the destination address in received signalling. This address is preferably (substantially) the same individual address (ISSI) as would be used if operating as a standard V+D terminal.

In this embodiment, as discussed above, all exchanges between the terminal part V+D MS B and the gateway part DM-GATE may be air interface transmissions via a SwMI or, preferably any other form of intercommunication by wireless or wired or virtual means. Furthermore, the gateway part DM-GATE must generate radio transmissions to simulate the behaviour of a real V+D terminal transmitting to a SwMI on the air interface, but need not receive the SwMI's retransmission of these transmissions.

In this embodiment, when the user 9 wishes to set up a new call, there are two phases of signalling.

Firstly, the gateway terminal part of the 1 will request a call from the fixed network (SwMI) (U-SETUP), with no signalling over the direct mode air interface. The source address for this call set-up is preferably the ISSI used by the gateway part on the V+D network.

When this request is granted (D-CONNECT), the gateway part (DM-GATE) of the apparatus 1 then signals the call set-up (DM-SETUP) to the direct mode destination address for the call as if the call set-up had originated from a V+D terminal communicating via the fixed network (SwMI). The source address used for this call set-up is preferably' the identifier (the ISSI) used by the gateway apparatus 1 on the V+D network. The "gateway-generated" message flag in the DM-SETUP signalling is also set.

Traffic is then transmitted by the apparatus 1 to the V+D network destination address as if it had been received by the gateway apparatus 1 from a V+D operating terminal, and traffic is transmitted by the gateway apparatus 1 to the direct mode destination address as if it had been received via the V+D network interface of the gateway apparatus 1. There is no need to receive the traffic from the SwMI as it may be transmitted to the DMO interface via a logical link.

When the transmission of traffic ends, the gateway apparatus signals this to the SwMI {U-TX CEASED} and to the DMO interface {DM-TX CEASED}. There is no need to receive the D-TX CEASED from the SwMI as it is may be transferred to the DMO interface via a logical link.

When a user at a DM-MS (DM MS A, for example) intends to transmit in a new call or in an ongoing call (for example by pressing the transmit key) the signalling is as defined by existing ETSI standards.

When the user 9 of the gateway apparatus 1 wishes to transmit within an ongoing call, there are again two phases of signalling.

Firstly, the gateway apparatus 1 requests permission to transmit from the fixed network (SwMI) (U-TX DEMAND). When this is granted (D-TX GRANTED), the gateway apparatus 1 signals the call set-up (DM-SETUP) to the direct mode destination address (terminal) as if the granted transmission had originated from the fixed (V+D) network (SwMI). The "gateway-generated" message flag in the SM-SETUP signalling is again set.

Traffic is then transmitted by the gateway apparatus 1 to the direct mode destination address as if it had been received by the V+D network interface of the gateway apparatus 1, and traffic is transmitted by the gateway apparatus 1 to the V+D network destination address as if it had originated from a V+D terminal.

When a user at a V+D-MS intends to transmit in a new call or in an ongoing call (for example by pressing the transmit key) the signalling is as defined by existing ETSI standards.

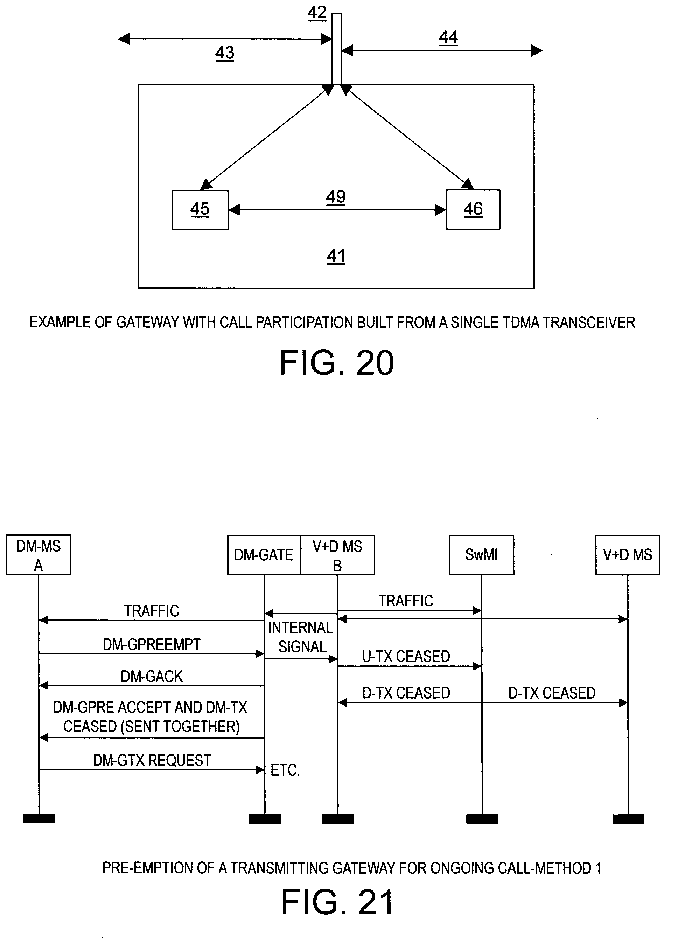

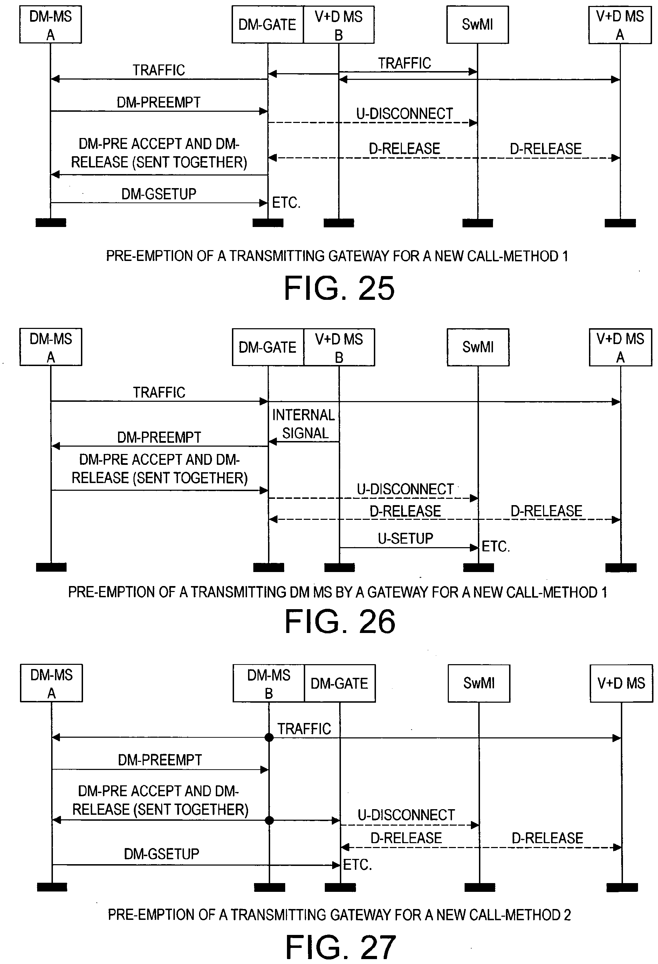

When a user at a DM-MS intends to transmit with priority in a new call or in an ongoing call (for example by pressing the transmit key) and the communication channel is occupied by another user with lower priority, any pre-emption requests from the DM MS and their responses are signalled as defined by existing ETSI standards. This is shown in Figure 21 and Figure 25.

When a user at a V+D-MS intends to transmit with priority in a new call or in an ongoing call (for example by pressing the transmit key) and the communication channel is occupied by another user with lower priority, any pre-emption requests from the V+D MS and their responses are signalled as defined by existing ETSI standards.

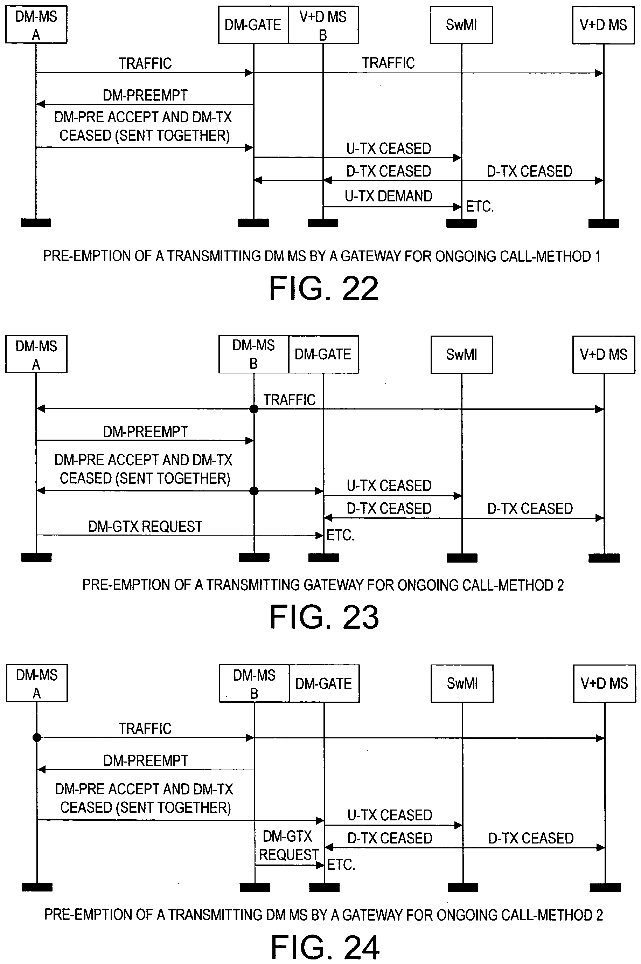

When a user at the gateway intends to transmit with priority in a new call or in an ongoing call (for example by pressing the transmit key) and the communication channel is occupied by another user with lower priority, any pre-emption requests from the virtual V+D MS B is as defined by existing ETSI standards. This is shown in Figure 22 and Figure 26.

The timeslot usage within the TETRA TDMA structure is such that the gateway apparatus using this signalling method uses timeslots according to the operation of a standard gateway with the variation that when the gateway is transmitting traffic, it is additionally transmitted on the allocated V+D uplink timeslot.

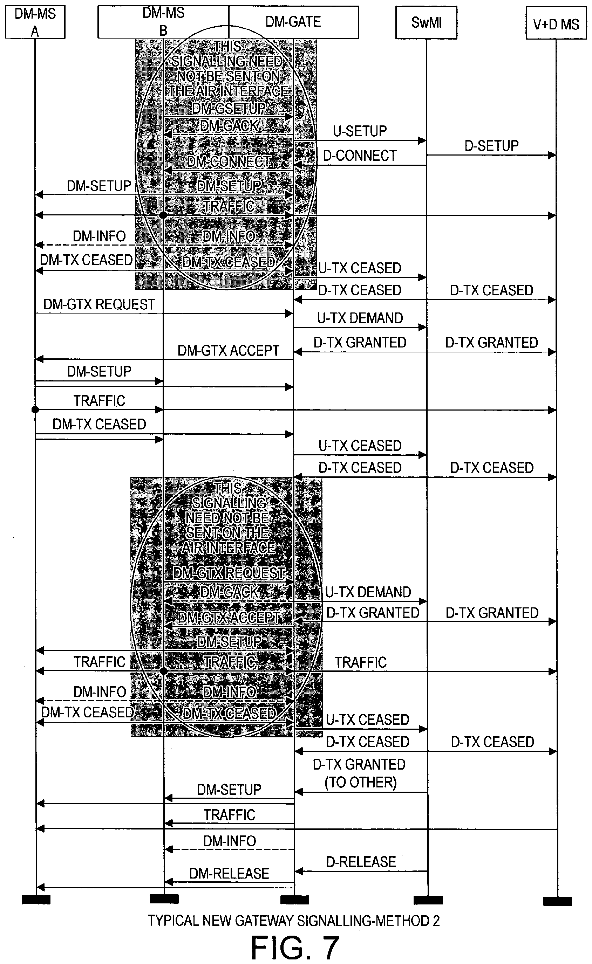

Figure 7 shows a second embodiment of signalling for setting up calls, etc., via the gateway apparatus 1 in this embodiment of the present invention.

In this embodiment, it is assumed that the gateway apparatus 1 in fact comprises a co-located direct mode "terminal" function (DM-MS B in Figure 7) and gateway function (DM-GATE in Figure 7) that can communicate with each other over an internal signalling interface.

The direct mode terminal and gateway that are co-located in the gateway apparatus 1 preferably (but need not) share power, audio, display and other input and output devices. The terminal and gateway functions are linked at layer 1 (the physical layer), layer 2 (the data link layer) or layer 3 (DMO call control) or any other layer of the International Standards Organisation Open System Interface (ISO OSI) Basic reference model.

Again, it is assumed that prior to the signalling shown in Figure 7, the gateway apparatus 1 has registered with the V+D network 4 switching and management infrastructure (SwMI) and is monitoring a control channel transmitted by the fixed network 4 SwMI.

The gateway apparatus 1 is also again assumed to be generating a Presence Signal to provide a frequency and timing reference to DMO terminals (DM-MS A and DM-MS B etc.) and to inform those terminals of the gateway apparatus' availability. The apparatus 1 can also again generate appropriate presence signalling during a call to maintain the link between the call participants.

In this embodiment, DM-MS A is a DMO terminal using the services of DM-GATE. V+D-MS is a V+D terminals using the services of a SwMI to communicate with DMO MSs (including DM-MS A) via DM-GATE.

DM-MS B is the terminal part of the gateway apparatus 1 and may be co-located with the gateway part DM-GATE in one unit or in a plurality of units that may be interconnected by any means e.g. wired or wireless such that a user has access to both DM MS B and DM-GATE. The interconnection between DM MS B and DM-GATE may involve standard TETRA radio transmissions or any other form of wireless or wired connection that may or may not in some way replicate the TETRA signalling and traffic. In a preferred embodiment, the functions of DM MS B and DM-GATE are logically combined in one or more units such that the user has a common interface to both functions.

In a particularly preferred embodiment, the functions of the terminal part DM MS B and gateway part DM-GATE are combined in a common unit such that there is no necessity for DM MS B and DM-GATE to exchange signalling and traffic over any kind of air interface, thus eliminating hardware associated with radio transmission and reception. In this preferred embodiment, DM MS B can be thought of as a 'virtual' DMO terminal incorporated within DM-GATE such that DM-GATE is able to transmit to DM-MS A and/or V+D MS via a SwMI substantially the same signalling and traffic that DM-MS A and/or V+D MS via a SwMI would receive from DM-GATE if DM MS B were a real DMO terminal transmitting to DM-MS A (with communication type set to 'via DM-GATE') and/or V+D MS via a SwMI and DM-GATE; similarly, DM-GATE is able to receive from DM-MS A and/or V+D MS via a SwMI substantially the same signalling and traffic that DM-MS A and/or V+D MS A via a SwMI would transmit to DM-GATE if DMO MS B were a real DMO terminal receiving from DM-MS A and/or V+D MS via a SwMI and DM-GATE.

In this embodiment, the signalling and traffic that other DMO terminals and a SwMI receive from the gateway part DM-GATE or transmit to DM-GATE are substantially similar to the signalling and traffic that these other DMO terminals and SwMI would receive or transmit if the terminal part DMO MS B were a real DMO terminal operating via a DM-GATE, thus maintaining compatibility with existing terminal behaviour.

In order to do this, DM-GATE has an address associated with the virtual DMO terminal DM-MS B that it includes as the source address in transmitted signalling and recognises as the destination address in received signalling. This address is preferably the same individual address (ISSI) as would be used when operating as a standard DMO terminal, although it could be a 'pseudo' address (Pseudo SSI).

In Figure 7, all exchanges between DM MS B and DM-GATE may be air interface transmissions or any other form of intercommunication by wireless or wired or virtual means. DM-GATE may generate radio transmissions to simulate the behaviour of a real DM-MS B transmitting to DM-GATE on the air interface, but need not do so since DM-GATE is the only intended recipient of such transmissions. DM-GATE may generate radio transmissions to simulate the behaviour of DM-GATE transmitting to a real DM-MS B on the air interface, but need not do so since DM-MS B is the only intended recipient of such transmissions.

As discussed above, in this embodiment of the gateway apparatus 1, when the user of the apparatus intends transmitting a new call or in an ongoing call, the signalling to all of the participants in the call is as if a direct mode terminal and a gateway coexist at the same location (i.e. within the apparatus).

In this embodiment, the signalling arrangements are as follows.

When the gateway apparatus 1 is to set up a new call, the terminal part of the apparatus first transmits a call request (for a via-gateway call) (DM-GSETUP) to the gateway part of the apparatus 1 as if it were a direct mode terminal over the internal connection within the gateway apparatus 1 (or over the wireless connection, if provided). The gateway function of the apparatus 1 then requests a call from the fixed network (SwMI) (U-SETUP) as if it had received a direct mode call request from a terminal. When this is granted (D-CONNECT), the gateway function of the gateway apparatus 1 signals the call set-up completion (DM-GCONNECT) to the terminal function internally within the apparatus 1 (or over the wireless connection). The apparatus then transmits the final phase of the call set-up (DM-SETUP) to the direct mode destination address (terminals) via its terminal function, as if it were a direct mode terminal operating via the gateway part DM-GATE (i.e. indicating "via-GATE", including the gateway address and indicating that it is not a gateway-generated message).

Traffic is then transmitted via the terminal function DM-MS B of the apparatus 1 to the direct mode destination address as if it were a direct mode terminal operating via the gateway part DM-GATE, and by the gateway function of the apparatus 1 to the fixed (V+D) network destination address as if the gateway function had received that traffic from a direct mode terminal operating via the gateway part (DM-GATE).

Optional signalling e.g. DM-INFO may be transmitted during traffic occupation in order to transfer address information, as with an existing standard gateway.

When a user at a DM-MS intends to transmit in a new call or in an ongoing call (for example by pressing the transmit key) the signalling is as defined by existing ETSI standards.

When the user 9 wishes to transmit within an ongoing call proceeding via the gateway function of the gateway apparatus 1 (e.g. by pressing their PTT button), the terminal function of the gateway apparatus 1 first transmits a transmission request (addressed to the gateway function of the apparatus) (DM-GTX REQUEST) as if it were a direct mode operating terminal operating via the gateway part (DM-GATE). Again, this transmission request is signalled internally within the gateway apparatus 1 (or over a wireless connection).

The gateway function of the gateway apparatus 1 then requests permission to transmit from the fixed network (SwMI) (U-TX DEMAND) as if it had received a transmission request from a direct mode terminal. When this is granted (D-TX GRANTED), the terminal function of the gateway apparatus 1 then signals the final phase of the call set-up (DM-SETUP) to the direct mode destination address as if it were a direct mode terminal operating via the gateway part (DM-GATE).

Traffic is then transmitted by the terminal function (DM-MS B) of the gateway apparatus 1 to the direct mode destination address as if the terminal function were a direct mode terminal operating via DM-GATE, and by the gateway function of the apparatus 1 to the fixed (V+D) network destination address as if that traffic had been received by the gateway apparatus 1 from a direct mode terminal operating via the gateway part (DM-GATE).

When a user at a V+D MS intends to transmit in a new call or in an ongoing call (for example by pressing the transmit key) the signalling is as defined by existing ETSI standards.

When a user at a DM-MS intends to transmit with priority in a new call or in an ongoing call (for example by pressing the transmit key) and the DMO communication channel is occupied by another user with lower priority, any pre-emption requests from the DM MS and their responses are signalled as defined by existing ETSI standards. This is shown in Figure 23 and Figure 27.

When a user at a V+D-MS intends to transmit with priority in a new call or in an ongoing call (for example by pressing the transmit key) and the DMO communication channel is occupied by another user with lower priority, any pre-emption requests from the V+D MS and their responses are signalled as defined by existing ETSI standards.

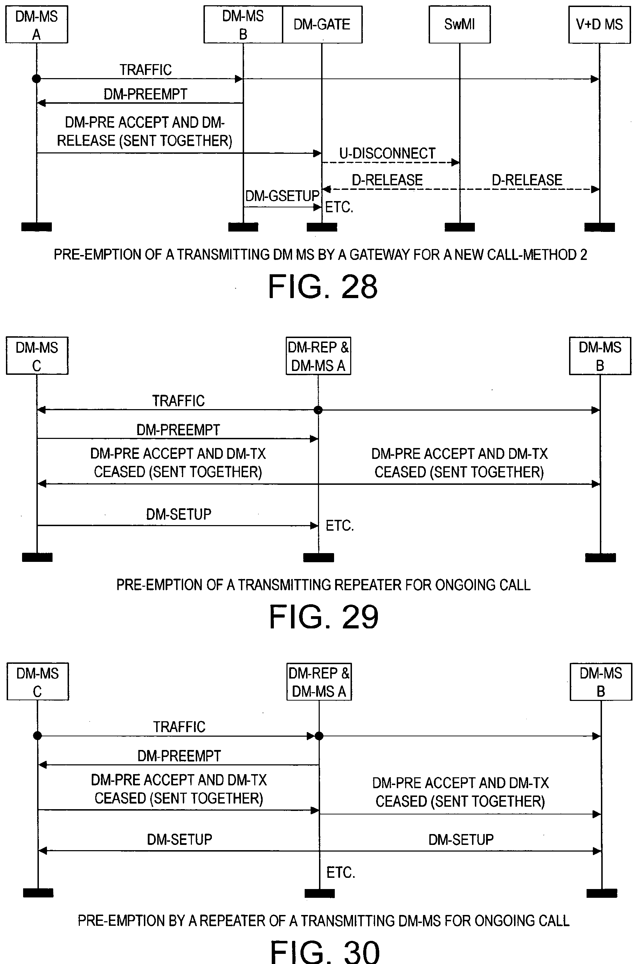

When a user at the gateway intends to transmit with priority in a new call or in an ongoing call (for example by pressing the transmit key) and the DMO communication channel is occupied by another user with lower priority, any pre-emption requests from the virtual DM MS B is as defined by existing ETSI standards. This is shown in Figure 24 and Figure 28.

The timeslot usage within the TETRA TDMA structure is such that the gateway according to this signalling method uses timeslots according to the operation of a standard gateway with the variation that when the gateway is transmitting its own traffic, it is transmitted using the DMO timeslot which a standard gateway would use for reception of traffic from the master DM-MS.

Exemplary International Standard Organisation Open System Interface layered models for the gateway apparatus 1 of the present embodiments will now be described.

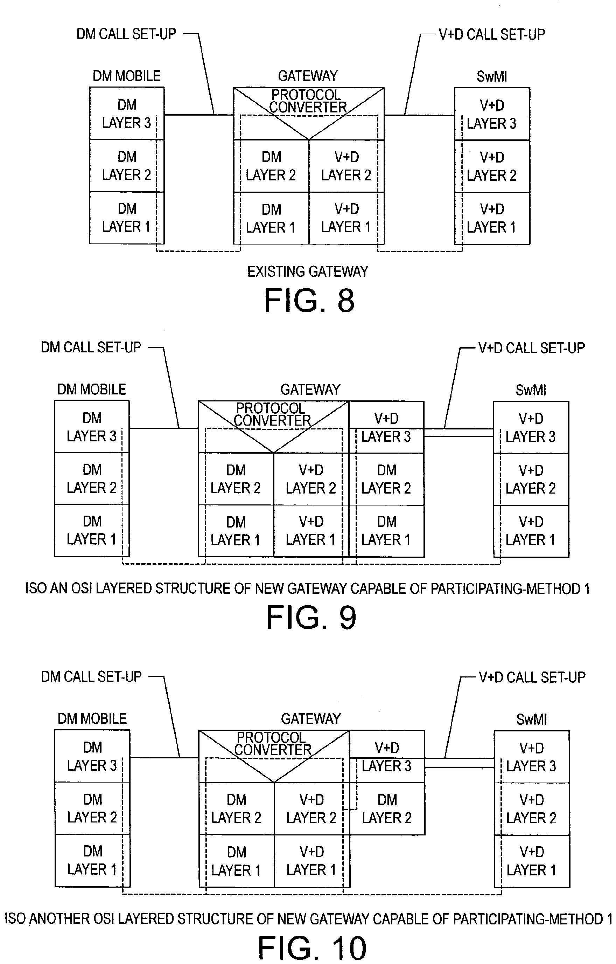

Figure 8 shows schematically the Exemplary International Standard Organisation Open System Interface layered model for a standard TETRA gateway.

Figures 9, 10, 11, 12, 13 and 14 show schematically different embodiments of an International Standards Organisation Open System Interface (ISO OSI) layered model for the gateway apparatus 1 of these embodiments.

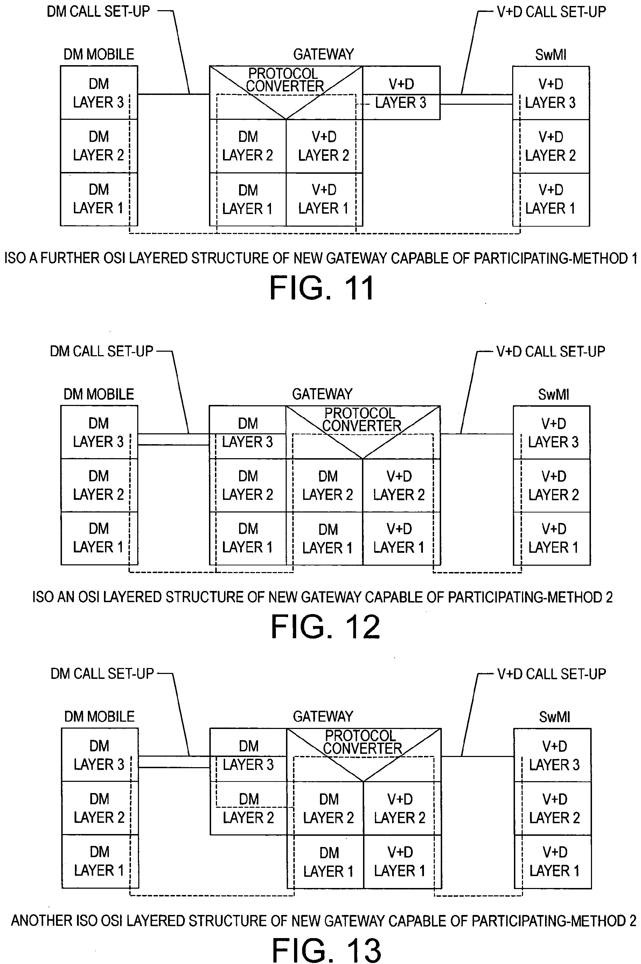

Figure 9 shows one embodiment of an ISO OSI layered model for the gateway apparatus 1 with interconnection at layer 1 for use in the arrangement shown in Figure 6. Figure 10 shows an embodiment having interconnection at layer 2, and Figure 11 shows an embodiment having interconnection at layer 3, for use in the arrangement shown in Figure 6.

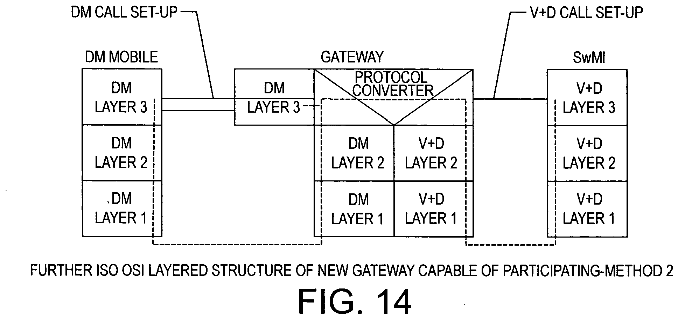

Figure 12 shows an embodiment having interconnection at layer 1, Figure 13 shows an embodiment having interconnection at layer 2 and Figure 14 shows an embodiment having interconnection at layer 3, for use in the arrangement shown in Figure 7.

In the above embodiments, the gateway apparatus 1 broadcasts a presence signal (as is known in the art for existing TETRA gateways) to inform the direct mode operating terminals of its availability. This presence signal is generated at regular or irregular intervals in order to maintain synchronisation to the V+D network 4 in advance of any call set-up operations by DMO terminals. This presence signal allows DMO-terminals to perceive that the gateway apparatus 1 is available, and to obtain a frequency and timing reference that is derived from the frequency and timing of the V+D network 4.

It would also be possible for the gateway apparatus 1 to operate without broadcasting such a presence signal.

In any event, the gateway apparatus 1 periodically generates and broadcasts a (presence) signal during a DMO call proceeding via it in order to maintain synchronisation and maintain the authorisation to use the gateway and to provide ongoing feedback that the gateway is receiving the DMO terminal's transmissions.

The gateway apparatus 1 operates using the TETRA TDMA structure, where a multiframe is divided into 18 frames, and a frame is sub-divided into 4 slots, each slot having a duration of 85/6 ms.

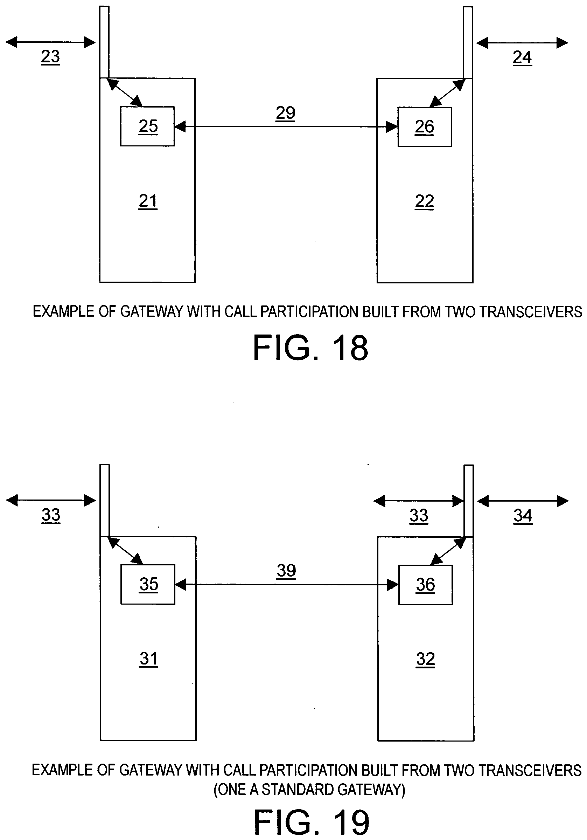

Figure 18 shows one embodiment of how the gateway apparatus 1 may be constructed.

In this embodiment, the gateway apparatus 1 has two separate radio transceiver units, a radio transceiver 21 that operates on a TETRA direct mode net, communicating with TETRA DMO terminals using DMO frequencies and protocols 23, and a radio transceiver 22 that operates on a TETRA V+D network, communicating with the TETRA V+D network using TETRA V+D frequencies and protocols 24.

Where appropriate, the gateway arrangement illustrated in Figure 18 may further include, e.g., filters or increased physical separation between the two antennas 29 and 30, to help reduce the possibility of receiver blocking, as is known in the art.

Figure 19 shows schematically a second embodiment of how the gateway apparatus 1 of these embodiments may be constructed.

In this embodiment, the gateway apparatus 1 comprises a radio transceiver 31 that operates on a TETRA direct mode net, communicating with TETRA DMO terminals using DMO frequencies and protocols 33, and a radio transceiver 32 that operates as a standard TETRA gateway, communicating with the TETRA V+D network using TETRA V+D frequencies and protocols 34, and with TETRA DMO terminals using DMO frequencies and protocols 33.

In this embodiment, the transceiver 31 effectively provides a terminal function of the gateway apparatus 1 and the transceiver 32 provides the gateway function of the gateway apparatus 1. These two transceivers (i.e. the terminal and gateway functions) can communicate with each other via an internal signalling connection 39.

Figure 20 illustrates a third embodiment of the gateway apparatus 1.

In this arrangement, the gateway apparatus 1 is constructed using a single transceiver 41 that uses a single transmitting and receiving antenna 42 that is connected alternately to the transmitter or receiver, as required. The gateway is able to switch rapidly between receive and transmit and between the frequency of the DMO net and the frequencies of the V+D network.

In this arrangement of the gateway apparatus 1, when the gateway apparatus 1 is receiving circuit mode traffic from a direct mode operating terminal, and transmitting the contents to the V+D network, the V+D and DMO TDMA structures are aligned so that timeslot 1 in the DMO transmissions is delayed by 3 timeslots relative to the V+D downlink slot.

With this arrangement, the gateway apparatus 1 can achieve transmitting and receiving on the DMO channel and on the V+D downlink frequency at different times, once per frame, such that it can transmit the DMO call traffic and the V+D call traffic, using a single transceiver and single antenna that is shared between receive and transmit. Since the gateway apparatus 1 never receives and transmits at the same time, the gateway receiver is never blocked by the gateway transmitter.

In this arrangement, when the gateway apparatus 1 receives an incoming call from the V+D network 4, it may need to realign its timing if the traffic channel allocated by the V+D network is on a different timeslot from that used by the control channel that the gateway apparatus 1 was monitoring. In this case, the gateway apparatus 1 may and preferably does delay this realignment, possibly missing one or two frames of incoming traffic, in order to send signalling with its existing timing to instruct the relevant DMO terminal or terminals that are currently transmitting to cease doing so.

The correct alignment between the DMO and V+D timing can then be achieved by adjusting the timing of the DMO channel when the gateway apparatus 1 has ascertained that any existing'DMO transmission has ceased. This timing adjustment can be carried out using timing adjustment signalling such as that that has already been specified for voice calls through TETRA gateways.

Figure 5 shows a further embodiment of the present invention comprising a repeater apparatus that can operate in accordance with the present invention.

As shown in Figure 5, the repeater apparatus 11 can provide a direct mode communication path between terminals 12, 13 and 14 which are operating according to direct mode protocols. The repeater apparatus 11 has a direct mode coverage area 15. In accordance with the present invention, and as shown in Figure 5, the repeater apparatus 11 also includes a "virtual" DMO terminal 17 that allows a user 16 of the apparatus 11 to participate in a call that is proceeding via the repeater apparatus 11.

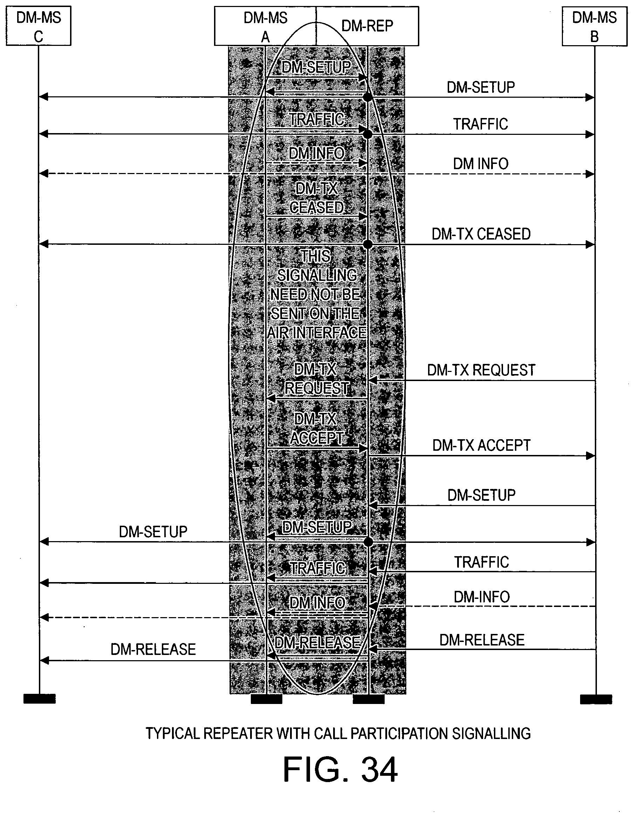

In Figure 34 DM-MS B (14) and DM-MS C (12) are DMO terminals using the services of DM-REP (11). DM-MS A is the DMO virtual terminal 17 using the service of repeater part DM-REP of the repeater apparatus in order to participate in calls.

The terminal part DM-MS A of the repeater apparatus 11 may be co-located with DM-REP in one unit or a plurality of units that may be interconnected by any means e.g. wired or wireless such that a user has access to both DM-MS A and DM-REP. The interconnection between DM-MS A and DM-REP may involve standard TETRA radio transmissions or any other form of wireless or wired connection that may or may not in some way replicate the TETRA signalling and traffic. In a preferred embodiment, the functions of DM-MS A and DM-REP are logically combined in one or more units such that the user has a common interface to both functions.

In a particularly preferred embodiment, the functions of DM-MS A and DM-REP are combined in a common unit as shown in Figure 5, such that there is no necessity for DM-MS A and DM-REP to exchange signalling and traffic over any kind of air interface, thus eliminating hardware associated with radio transmission and reception. In this preferred embodiment, DM-MS A can be considered to be a 'virtual' DMO terminal (17) incorporated within DM-REP (11) such that DM-REP is able to transmit to DM-MS B (14) and/or DM-MS C (12) substantially the same signalling and traffic that DM-MS B and/or DM-MS C would receive from DM-REP if DM-MS A were a real DMO terminal (13) transmitting to DM-MS B and/or DM-MS C via DM-REP; similarly, DM-REP is able to receive from DM-MS B and/or DM-MS C substantially the same signalling and traffic that DM-MS B and/or DM-MS C would transmit to DM-REP if DM-MS A were a real DMO terminal receiving from DM-MS B and/or DM-MS C via DM-REP.

In this embodiment, the signalling and traffic that other DMO terminals receive from DM-REP or transmit to DM-REP are similar to the signalling and traffic that these other DMO terminals would receive or transmit if DM-MS A were a real DMO terminal operating via DM-REP, thus maintaining compatibility with existing terminal behaviour. In order to do this, DM-REP (11) has an address associated with the virtual DMO terminal DM-MS A (17) that it includes as the source address in transmitted signalling and recognises as the destination address in received signalling. Typically this address could be the same individual address (ISSI) that would be used when operating as a standard DMO terminal, although it could be a 'pseudo' address (Pseudo SSI).

Thus, all exchanges between DM-MS A (17) and DM-REP (11) may be air interface transmissions or any other form of intercommunication by wireless or wired or virtual means. DM-REP may generate radio transmissions to simulate the behaviour of a real DM-MS A (13) transmitting to DM-REP on the air interface, by transmitting at times that it would normally be attempting to receive transmissions from a real DM-MS, but need not do so since virtual DM-MS A incorporated in DM-REP is the only intended recipient of such transmissions. DM-REP may generate radio transmissions to simulate the behaviour of DM-REP transmitting to a real DM-MS A on the air interface, but need not do so since virtual DM-MS A is the only intended recipient of such transmissions.

The participation by the user 16 in a call that is proceeding via the repeater apparatus 11 in this embodiment that is supported by the repeater apparatus 11 again comprises allowing the user 16 to monitor the call information and call traffic of a call proceeding via the repeater apparatus 11, and allowing the user 16 to transmit within a call that is proceeding via the repeater apparatus 11, and to initiate a call that is to proceed via the repeater apparatus 11.

In the case of the user 16 monitoring call information and call traffic passing via the repeater function of the repeater apparatus 11, the repeater apparatus 11 is configured such that if the signalling passing through the repeater apparatus 11 is addressed to a group or individual address which the repeater apparatus 11 is configured to recognise as an address for which it may monitor a call, the repeater apparatus will, in addition to its normal repeater function, report call information to the user 16 and decode and decrypt any circuit mode traffic and present this to the user, as if the user had been receiving the call in direct mode.

In particular, in this embodiment, the repeater apparatus DM-REP 11 may monitor (listen to) calls and SDS messages exchanged by DM-MS C 12 and DM-MS B 14 via DM-REP 11 by interpreting the content of the exchanged messages and traffic. In particular, DM-REP may recognise the Destination Address in the repeated signalling as corresponding to a group or individual address that it possesses. DM-REP may monitor calls and messages selectively by address recognition or by other means or non-selectively.

DM-REP may also simultaneously recognise its Repeater Address and one or more individual or group addresses. Thus the repeater apparatus 11 (DM-REP) is receptive to calls that match any of its addresses and is able to respond accordingly. A call or message that only matches its Repeater Address may be repeated as for standard ETSI-defined repeater operation. A call or message that matches both its Repeater Address and one of its individual or group addresses may be repeated and may be monitored (and may also be participated in as described later). A call or message that matches one of its individual or group addresses and is signalled as a direct call not using its repeater service may be received and participated in as a standard direct call. Similarly, a call or message may be received from another repeater, or from a gateway, or from a repeater/gateway, or from a DMO terminal operating via a gateway, as for existing ETSI-defined behaviour for DMO terminals.

This allows the repeater apparatus 11 to operate simultaneously or quasi-simultaneously as both a repeater (11) and a DMO terminal (17), responding to addressing details in received signalling to determine the appropriate behaviour. When addressing details indicate that the repeater's service is being used (i.e. 'via-REP' and matching DM-REP repeater address), the repeater service is maintained; in other cases the repeater service is suspended (as defined by ETSI for standard repeater operation) but DM-REP may also behave as a standard DMO terminal in this case rather than simply suspending repeater operation while the DMO channel remains busy with activity not using its repeater service. Thus the user (16) of DM-REP (17/11) is not at a disadvantage to other users of DMO terminals as it is able to provide a DMO terminal service to the user as well as providing a DMO repeater service to other.users.

In these embodiments, where the user 16 of the repeater apparatus 11 wishes to transmit during a call that is proceeding via the repeater apparatus 11, or to originate a call that is to proceed via the repeater apparatus 11, the signalling sent over the DMO air interface by the repeater apparatus 11 is the same signalling (so far as is appropriate) as would be generated if the signalling had been initiated by a terminal connected to the repeater apparatus 11 via an air interface.

Thus, the signalling to all other participants in the call is as if the signalling originated from another DMO user operating via the repeater apparatus 11.

Figure 34 shows schematically an embodiment of a suitable signalling arrangement for this embodiment of the present invention.

Figure 34 illustrates group call operation between the virtual DM-MS A (17) part of the repeater apparatus 11 and real DMO terminals DM-MS B (14) and DM-MS C (12), but the embodiment also applies to individual calls between two parties. Prior to the actions in Figure 34, DM-REP (11) may generate occasional Presence Signals to inform DM-MS B and DM-MS C of the availability of DM-REP and to provide frequency and timing references.

If the user (16) of the repeater apparatus 11 (DM-REP) requests a call to a DMO group (typically by pressing their PTT button), then in response to this, the repeater function DM-REP of the repeater apparatus 11 sends call setup signalling (DM-SETUP) to DM-MS B and DM-MS C on the Slave Link as if it had received DM-SETUP from DM-MS A on the Master Link..As there is no real air interface Master Link between virtual DM-MS A and DM-REP (as there is a wired or logical interconnection), there is no need for virtual DM-MS A to receive the real Slave Link transmission to confirm link establishment to DM-REP, thus avoiding the need for DM-REP to receive and transmit simultaneously.

DM-REP then sends traffic to DM-MS B and DM-MS C on the Slave Link as if it had received traffic from DM-MS A on the Master Link.

DM-REP may send signalling during the call (e.g. DM-INFO) to DM-MS B and DM-MS C on the Slave Link as if it had received such signalling from DM-MS A on the Master Link.

DM-REP also sends occupation signalling periodically during the call (DM-OCCUPIED) (not shown in Figure 34) to DM-MS B and DM-MS C on the Slave Link to maintain the call as if it had received such signalling from DM-MS A on the Master Link.

DM-REP may transmit Presence Signals on the Master Link and/or on the Slave Link during the call (not shown in Figure 34), as for standard repeater operation.

When the user (16) of the repeater apparatus 11 requests to cease transmitting, typically by releasing their PTT button, the repeater function DM-REP sends signalling (DM-TX CEASED) to DM-MS B and DM-MS C on the Slave Link as if it had received DM-TX CEASED from DM-MS A on the Master Link.

DM-REP now sends reservation signalling periodically (DM-RESERVED) (not shown in Figure 34) on the Slave Link to hold the DMO channel in reservation as if it had received such signalling from DM-MS A on the Master Link.

DM-REP may transmit Presence Signals on the Master Link and/or on the Slave Link during reservation (not shown in Figure 34), as for standard repeater operation.

If the user of DM-MS B wishes to transmit, DM-MS B will request transmit permission from virtual DM-MS A by sending DM-TX REQUEST to DM-REP on the Slave Link with the DM-MS A address as the destination address, as if there were a real DM-MS A in reservation via DM-REP. DM-REP may re-transmit DM-TX REQUEST on the Master Link as for normal repeater operation, but need not do so since the only intended recipient is DM-MS A.

DM-REP transmits acceptance of the Tx request (DM-TX ACCEPT) to DM-MS B on the Slave Link as if it had received such signalling from DM-MS A on the Master Link.

DM-MS B now uses the Master Link to set up a call to DM-MS C and other members of the group via DM-REP, same as for the standard repeater operation described in Figure 33. However, virtual DM-MS A (17) incorporated in DM-REP (11) may recognise the destination group address and may monitor transmissions from DM-MS B (as discussed above).

DM-MS B, DM-MS C and the virtual DM-MS A may make further transmission requests via DM-REP according to the methods already described.

In this embodiment, DM-MS B (14), DM-MS C (12) and the virtual DM-MS A (17) may also make pre-emption requests via the repeater apparatus DM-REP (11) to gain use of the DMO channel in order either to transmit within an ongoing call (e.g. a high priority transmission request) or to set up a new call (e.g. an emergency call). Four such scenarios are shown in Figures 29 to 32.

Figure 29 illustrates another DMO terminal pre-empting the transmission by the user of the repeater in order to transmit within the ongoing call.

In this case, DM-REP (11) is transmitting traffic (and occupation signalling and optionally presence signalling, not shown) from virtual DM-MS A (17) to real DMO terminals DM-MS B (14) and DM-MS C (12) on the Slave Link as if it were receiving such traffic and signalling from a real DM-MS A (13) on the Master Link.

DM-MS C then requests pre-emption of virtual DM-MS A by sending DM-PREEMPT to DM-REP on the Slave Link with the DM-MS A address as the destination address, as it would if there were a real DM-MS A (13) in occupation via DM-REP. DM-REP may re-transmit DM-PREEMPT on the Master Link as for normal repeater operation, but need not do so since the only intended recipient is virtual DM-MS A.

DM-REP transmits acceptance of the pre-emption (DM-PRE ACCEPT) and end of transmission (DM-TX CEASED) to DM-MS C and DM-MS B on the Slave Link, as if it had received such signalling from DM-MS A on the Master Link.

DM-MS C (12) can now use the Master Link to set up a call to the group (virtual DM-MS A (17) and real DM-MS B (14) via DM-REP (11).

Figure 30 illustrates the user of the repeater pre-empting the transmission by another DMO terminal in order to transmit within the ongoing call.

In this example, DM-MS C (12) is transmitting traffic (and occupation signalling, not shown) to DM-REP (11) on the Master Link. DM-REP is re-transmitting this traffic and signalling on the Slave Link to DM-MS B (14) and may also be transmitting presence signalling (not shown). This is standard repeater operation, except that the virtual DM-MS A (17) incorporated in DM-REP (11) is also monitoring (receiving) the call from DM-MS C (12) such that the user (16) of DM-REP may listen to the call.

The user of DM-REP then requests pre-emptive transmission and DM-REP sends DM-PREEMPT to DM-MS C (12) on the Master Link as if it had received such signalling from DM-MS A on the Slave Link.

DM-MS C sends acceptance of the pre-emption (DM-PRE ACCEPT) and end of transmission (DM-TX CEASED) in a combined message to DM-REP on the Master Link as if it were responding to a pre-emption request from a real DM-MS A via DM-REP. DM-REP re-transmits this signalling on the Slave Link since DM-MS B and any other group members need to receive the DM-TX CEASED although the only recipient for DM-PRE ACCEPT is virtual DM-MS A.

DM-REP can now set up a call from virtual DM-MS A (17) via DM-REP (11) to DM-MS B (14) and DM-MS C (12) as already described.

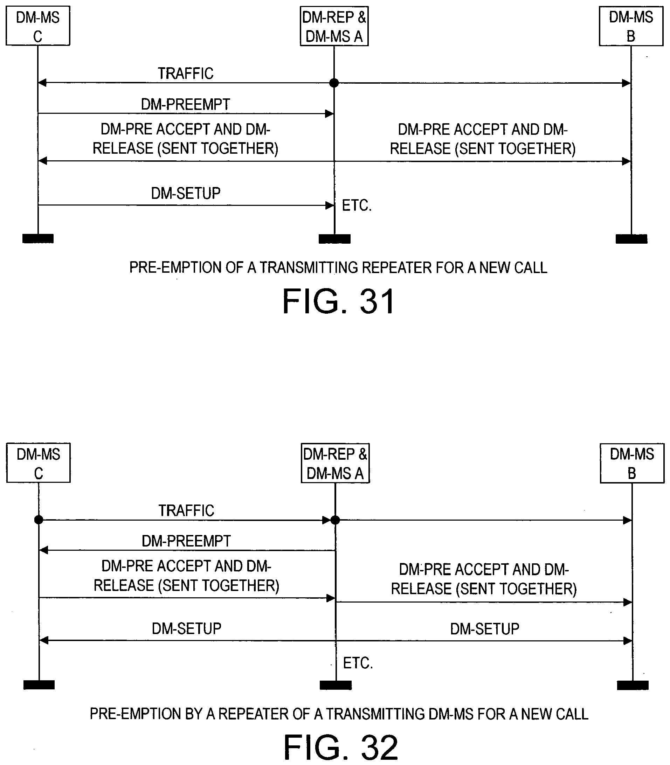

Figure 31 illustrates another DMO terminal pre-empting the transmission by the user of the repeater in order to set up a new call.

In this example, DM-REP is transmitting traffic (and occupation signalling and optionally presence signalling, not shown) from virtual DM-MS A (17) to real DMO terminals DM-MS B (14) and DM-MS C (12) on the Slave Link as if it were receiving such traffic and signalling from a real DM-MS A (13) on the Master Link.

DM-MS C then requests pre-emption of virtual DM-MS A (17) by sending DM-PREEMPT to DM-REP on the Slave Link with the DM-MS A address as the destination address, as it would if there were a real DM-MS A (13) in occupation via DM-REP. DM-REP may re-transmit DM-PREEMPT on the Master Link as for normal repeater operation, but need not do so since the only intended recipient is virtual DM-MS A.

DM-REP transmits acceptance of the pre-emption (DM-PRE ACCEPT) and end of the call (DM-RELEASE) to DM-MS C and DM-MS B on the Slave Link, as if it had received such signalling from DM-MS A on the Master Link.

DM-MS C can now use the Master Link to set up a new call via DM-REP.

Figure 32 illustrates the user of the repeater pre-empting the transmission by another DMO terminal in order to set up a new call.

In this example, DM-MS C (12) is transmitting traffic (and occupation signalling, not shown) to DM-REP (11) on the Master Link. DM-REP is re-transmitting this traffic and signalling on the Slave Link to DM-MS B and may also be transmitting presence signalling (not shown). This is standard repeater operation, except that the virtual DM-MS A (17) incorporated in DM-REP (11) may also be monitoring (receiving) the call from DM-MS C such that the user (16) of DM-REP may listen to the call.

The user of DM-REP then requests pre-emptive call setup and DM-REP sends DM-PREEMPT to DM-MS C on the Master Link as if it had received such signalling from DM-MS A on the Slave Link.

DM-MS C sends acceptance of the pre-emption (DM-PRE ACCEPT) and end of the call (DM-RELEASE) in a combined message to DM-REP on the Master Link exactly as if it were responding to a pre-emption request from a real DM-MS A via DM-REP. DM-REP re-transmits this signalling on the Slave Link since DM-MS B and any other group members need to receive the DM-TX RELEASE although the only recipient for DM-PRE ACCEPT is DM-MS A.

DM-REP can now set up a call from virtual DM-MS A (17) via DM-REP (11) as already described.

A number of preferred embodiments of ISO OSI layered structure models for the repeater apparatus 11 of the present embodiment will now be described.

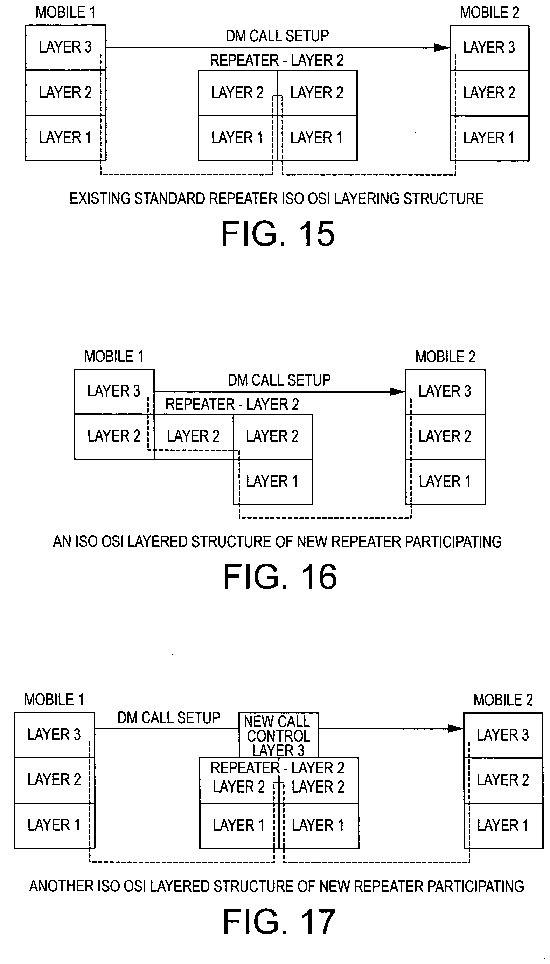

Figure 15 shows the ISO OSI layering structure for a standard TETRA repeater.

Figures 16 and 17 show different embodiments of an ISO OSI layered model for the repeater apparatus 11 of the present embodiment.

Although not illustrated, it will be appreciated by those skilled in the art that SDS messages may also be sent by the user of a repeater according to the methods described in this embodiment, etc., i.e. by DM-REP transmitting and substantially the same signalling on the Slave Link that it would transmit on the Slave Link if it were receiving such signalling from a real DMO terminal on the Master Link. Such signalling may be sent when DM-REP is otherwise idle, or while DM-REP is transmitting in a call (repeating virtual DM-MS A in occupation), or following DM-REP transmission in a call (repeating virtual DM-MS A in reservation), or following pre-emption of another DMO terminal.

It will be appreciated by those skilled in the art that repeater apparatus 11 (DM-REP) in these embodiments may be a single frequency (Type 1A) repeater or may operate on two frequencies (Type 1B or Type 2); in either case the operation is essentially similar. The repeater part (DM-REP) may also be the repeater (DM-REP) part of a combined repeater/gateway (DM-REP/GATE), subject to additional gateway signalling operations, and in this case may provide call participation on both DMO and V+D air interfaces.

It will be appreciated by those skilled in the art, that without the present invention, a DMO repeater may only participate in calls if it ends its repeater service (thus ending any call currently using the repeater service) and behaves as a standard DMO terminal.

For example, with reference to Figure 5, if DM-REP (11) ends its repeater service and becomes a real DMO terminal DM-MS A (13), then DMO terminals DM-MS B (14) and DM-MS C (12) lose the range-extending service of DM-REP (11) and may not be able to communicate with each other. Thus, while DM-MS A may be able to communicate with DM-MS B and DM-MS C, DM-MS B and DM-MS C may be out of range of each other without the service of the repeater apparatus 11 (DM-REP).

However, the present invention, in contrast to this, allows the user (16) of DM-REP (as virtual DMO terminal DM-MS A (17) operating via DM-REP (11)) to participate in a call without ceasing the service of DM-REP to DM-MS B (14) and DM-MS C (12), since normal repeater signalling is maintained. Thus DM-MS B and DM-MS C remain in range of each other via DM-REP without any interruption to the repeater service and with all parties (including the user of DM-REP) able to participate in calls using normal terminal operations (e.g. pressing PTT).

As will be appreciated by those skilled in the art, various modifications, changes or variations, etc., to the operation of the present invention and the present embodiment would be possible.

For example, although not illustrated, the invention is also applicable to calls and SDS messages employing End-to-End Encryption (E2EE). Additional signalling shown as an example (e.g. DM-INFO) could equally well be end-to-end signalling (e.g. DMAC-U-SIGNAL) for performing end-to-end encryption synchronisation, and the traffic shown could equally well be end-to-end encrypted traffic.

A repeater, for example, that does not possess the requisite encryption algorithms and keys will still be able to repeat the end-to-end signalling and traffic but will not be able to monitor or participate in calls. A repeater that does possess the requisite encryption algorithms and keys will be able to decrypt end-to-end traffic that it is monitoring, and will be able to encrypt end-to-end traffic that it transmits when participating in calls.

However, it is preferred for the integrity of the end-to-end encrypted traffic that the operations of repeating, monitoring and call participation do not insert, delete or re-order any of the end-to-end encrypted traffic frames. It is also advisable in order to maintain security that the repeating and participation actions do not modify the encryption state of such calls.

Similarly, although not illustrated, this invention is also applicable to calls and SDS messages employing Air Interface Encryption (AIE).

Again, a repeater, for example, that does not possess the requisite encryption algorithms and keys will be able to repeat some forms of air interface encryption (Class DM-2-A and Class DM-2-B) but will not be able to monitor or participate in calls and will not be able to repeat Class DM-2-C encrypted calls and messages. A repeater that does possess the requisite encryption algorithms and keys will be able to repeat all classes of AIE calls and messages, will be able to decrypt AIE traffic signalling and traffic that it is monitoring and will be able to encrypt AIE signalling and traffic when participating in calls. It is again preferred, in order to maintain security, that the repeating and participation actions do not modify the encryption state of such calls.

Furthermore, while the gateway apparatus 1 and repeater apparatus 11 could be configured solely to operate as a gateway or repeater in accordance with the present invention, it would also be possible for them to be configured to operate in one or more other modes as well, such as to be able to support standard gateway operation, direct mode operation, trunked mode operation (on the V+D network), repeater operation, or, indeed, any existing or future gateway, repeater, etc., modes of operation. In this case, the current mode of operation of the gateway apparatus 1 and/or repeater apparatus 11 could, for example, be selectable by user control or by prior configuration, and/or particular modes or operation may, for example, be associated with a particular call group or groups.

For example, the operating mode could be selectable and/or selected by prior configuration (customisation) of the apparatus to operate in the manner of the present invention. Alternatively or additionally, a suitable user interface could be provided to allow a user to select the desired operating mode. It would also similarly be possible to provide a remote control interface of the device, such as a wired or wireless interface, that would allow the operating mode to be selected by appropriate signalling.

It would also be possible, for example, to allow the operation of the apparatus to be selected and/or configured by appropriate over the air signalling, such as SDS messaging, on the DMO interface and/or the V+D air interface, or both.

It is preferably also or instead possible to configure the gateway apparatus 1 or the repeater apparatus 11 to be operable in two or more modes of operation, with the apparatus itself automatically selecting between the mode of operation to use, dependent, for example, on one or more particular and/or predetermined criteria or conditions.

For example, the type of gateway or repeater operation (e.g. with call participation or standard) to use could be associated with particular direct mode operation talk groups, such that, for example, calls directed to direct mode operation group A on the gateway apparatus 1 or repeater apparatus 11 would result in standard gateway or repeater operation, but calls directed to direct mode operation group B would result in gateway or repeater operation with call participation in the manner of the present invention.

It would also similarly be possible to associate particular operating modes with particular source and/or destination addresses that are to be specified in calls set up via the gateway apparatus 1 or repeater apparatus 11. For example, a call destined for direct mode operating group B could be specified as requiring gateway or repeater call operation with call participation in the manner of the present invention, while calls directed to direct mode operation group A and/or to a particular V+D group could be specified as to be handled as standard gateway or repeater calls. Similarly, the mode of operation could depend upon the call originating terminal, such that, for example, calls originating from a particular direct mode terminal B would be handled as gateway or repeater calls with call participation, whereas calls originated by a different direct mode terminal A, would be handled as standard gateway or repeater calls.

As discussed above, in one preferred embodiment, the apparatus of the present invention can function as a combined DMO repeater/gateway. In particular, the parts of this invention which apply to gateways and the parts of this invention that apply to repeaters may be combined to provide a repeater/gateway which provides call participation facilities to a user at the repeater/gateway.

In a particularly preferred embodiment of the present invention, when the apparatus or method is providing a gateway function for a call, the apparatus is configured to, when it receives a call that it would otherwise relay to the other air interface (receives a call intended to be relayed to the other side of the "gateway"), relay that call solely to its own terminal function, i.e. such that the user of the apparatus can receive and participate in the call, but the call is not otherwise relayed via the gateway function to another terminal.

For example, an incoming call from the fixed network (the V+D) side would be received by the apparatus, but instead of, as would be the case in "normal" gateway operation, relaying that call to one or more terminals on the direct mode network, the call is relayed only to the terminal function of the apparatus, and is not relayed to terminals operating on the direct mode network. This has the benefit that the user of the apparatus can be a user on the direct mode network that is able to receive the call from the fixed network, but the arrangement still leaves the direct mode network channel free for use by the direct mode users (i.e. the call from the fixed network does not occupy the direct mode channel).

A similar arrangement could be used in the case of a via-gateway call coming from the direct mode side (made by a direct mode terminal).

Preferably in these arrangements, any call establishment or set-up signalling, etc., on the network (the air interface) to which the call would normally be relayed by the gateway function is omitted as well, i.e. such that when the call is received, the call is simply relayed to the terminal function of the apparatus, and there is no call establishment or call set-up signalling on the other network (the other air interface).

The call is preferably relayed to the terminal function of the apparatus via the local connection (interface) between the gateway function and the terminal function of the apparatus.

These arrangements can equally apply in the case of short messages, and it is preferred that operation in this manner (namely solely relaying a communication (a call or short message) to the terminal function of the apparatus) can be configured and/or triggered selectively, preferably in use.

For all of the arrangements and embodiments of the present invention, it is preferred that the operation of the gateway apparatus 1 or the repeater apparatus 11 can be modified by one or more of a plurality of means, such as customisation, remote control (including wired or wireless), user interface action and/or signalling over the DMO and/or V+D air interface, etc..

Although the above embodiments have been described with particular reference to the handling of calls that are set up via the gateway apparatus 1 or the repeater apparatus 11, the apparatus can also and does preferably also operate in a similar manner for SDS messages (save that in this case there would be no concept of call establishment and traffic channel assignment). Thus, in a preferred embodiment, the user and/or an internal or external function, of the apparatus is able to send and/or receive a short message via the gateway and/or repeater function of the apparatus, as appropriate.

It can be seen from the above that the present invention, in its preferred embodiments at least, provides an apparatus and method that can simultaneously operate both as a direct mode repeater and as a terminal operating via that repeater, as a direct mode gateway and as a terminal operating via that gateway, and/or as a direct mode repeater/gateway and as a terminal operating via that repeater gateway.

Moreover, a repeater and/or gateway arrangement is provided that can exchange voice calls and SDS messages via radio signals with one or more (DMO or V+D) terminals, but such that the repeater and/or gateway service to other terminals is maintained.

In particular, the Applicants have recognised that while it would be simpler to allow the user of the apparatus to participate in a call, etc., simply by transmitting as a standard (DMO or V+D) terminal, that would undesirably cause the loss of the repeater and/or gateway service to the other terminals. The present invention avoids this by instead using signalling that is similar to and/or that simulates, signalling that other terminals expect to see for repeater and/or gateway operation, so as to allow those other terminals to maintain their perception of the availability of (and their use of) the repeater and/or gateway service of the apparatus, even while a user of the apparatus is participating in the call, etc..

Furthermore, the air interface signalling at least used in arrangements of the present invention can be in accordance with existing signalling standards, thereby ensuring interoperability with existing systems and equipment, etc., and the user of the repeater or gateway or repeater/gateway may participate in a call, etc., using the same tactile, visual and audio interfaces as would be used for normal terminal operation.

## Claims

1. An apparatus (1; 11) for use in a communications system in which terminals of the system can communicate with each other via a network infrastructure (4) of the system and/or in a direct mode of operation in which terminals can communicate with each other without the communication passing via the network infrastructure (4), the apparatus (1; 11) comprising:
means for providing a direct mode operation repeater function and/or a gateway function for a terminal or terminals (2, 3, 5, 6; 12, 13, 14) of the communications system; and **characterised by**
means for allowing a user (9; 16) of the apparatus (1; 11) to participate in a call for which the apparatus (1; 11) is providing and/or is to provide a repeater and/or gateway function; and by further comprising:
means for, when the user (9; 16) of the apparatus (1; 11) wishes to transmit in an ongoing call or to initiate a call for which the apparatus (1; 11) is providing and/or is to provide a repeater function, signalling to all the other participants in the call as if the signalling originated from a terminal operating in a direct mode of operation via the repeater function that the apparatus (1; 11) is providing and/or is to provide; and/or
means for, when the user (9; 16) of the apparatus (1; 11) wishes to transmit in an ongoing call or to initiate a call for which the apparatus (1; 11) is providing and/or is to provide a gateway function, signalling to all the other participants in the call as if the signalling originated from a terminal operating:
via the network infrastructure (4) and the gateway function that the apparatus (1; 11) is providing and/or is to provide; or
in a direct mode of operation via the gateway function that the apparatus (1; 11) is providing and/or is to provide;
and
wherein the means for providing the direct mode terminal function and the repeater function and/or a gateway function comprise an internal signalling interface which may be linked at layer 1, layer 2, or layer 3 or any other layer of the International Standards Organisation Open System Interface Basic reference model.

2. The apparatus (1; 11) of claim 1, comprising means for allowing a user (9; 16) of the apparatus (1; 11) to monitor the call information and/or the call traffic of calls using the repeater and/or gateway function of the apparatus (1; 11).

3. The apparatus (1; 11) of any one of the preceding claims, comprising means for providing call information and/or traffic to a user (9; 16) for selected calls that use the apparatus (1; 11) as a repeater and/or gateway.

4. The apparatus (1; 11) of any one of the preceding claims, comprising:
means for allowing a user (9; 16), an internal function or application and/or an external function or application of the apparatus (1; 11) to send and/or receive a short message for which the apparatus (1; 11) is providing and/or is to provide a repeater and/or gateway function.

5. The apparatus (1; 11) of any one of the preceding claims, wherein the apparatus (1; 11) can provide a gateway function for a call or short message, and comprises means for, in response to receiving a call or short message from one network side of the apparatus (1; 11) that is intended to be transmitted by the gateway function of the apparatus to the other network side of the apparatus (1; 11), providing the call traffic or short message to a terminal function of the apparatus (1; 11) and not relaying the call traffic or short message to any other terminal which is operating on the other network side of the apparatus (1; 11).

6. A method of operating an apparatus (1; 11) for use in a communications system in which terminals of the system can communicate with each other via a network infrastructure (4) of the system and/or in a direct mode of operation in which terminals can communicate with each other without the communication passing via the network infrastructure (4), the apparatus (1; 11) comprising means for providing a direct mode operation repeater function and/or a gateway function for a terminal or terminals (2, 3, 5, 6; 12, 13, 14) of the communications system; the method **characterised by** comprising:
the apparatus (1; 11) allowing a user (9; 16) of the apparatus (1; 11) to participate in a call for which the apparatus (1; 11) is providing and/or is to provide a repeater and/or gateway function; and by further comprising:
either:
signalling by the apparatus (1; 11), when the user (9; 16) of the apparatus (1; 11) wishes to transmit in an ongoing call or to initiate a call for which the apparatus (1; 11) is providing and/or is to provide a repeater function, to all the other participants in the call as if the signalling originated from a terminal operating in a direct mode of operation via the repeater function that the apparatus (1; 11) is providing and/or is to provide; or
signalling by the apparatus (1; 11), when the user (9; 16) of the apparatus (1; 11) wishes to transmit in an ongoing call or to initiate a call for which the apparatus (1; 11) is providing and/or is to provide a gateway function, to all the other participants in the call as if the signalling originated from a terminal operating:
via the network infrastructure (4) and the gateway function that the apparatus (1; 11) is providing and/or is to provide; or
in a direct mode of operation via the gateway function that the apparatus (1; 11) is providing and/or is to provide;
where by providing the direct mode terminal function and the repeater function and/or gateway function is realised via an internal signalling interface between a terminal function and the repeater and/or gateway function that links the functions at layer 1, layer 2, or layer 3 or any other layer of the International Standards Organisation Open System Interface Basic reference model.

7. The method of claim 6, comprising the apparatus (1; 11) allowing a user (9; 16) to monitor the call information and/or the call traffic of calls using the repeater and/or gateway function of the apparatus (1; 11).

8. The method of any one of claims 6 to 7, comprising the apparatus (1; 11) providing call information and/or traffic to a user (9; 16) for selected calls that use the apparatus (1; 11) as a repeater and/or gateway.

9. The method of any one of claims 6 to 8, comprising:
the apparatus (1; 11) allowing a user (9; 16), an internal function or application and/or an external function or application of the apparatus (1; 11) to send and/or receive a short message for which the apparatus (1; 11) is providing and/or is to provide a repeater and/or gateway function.

10. The method of any one of claims 6 to 9, wherein the apparatus (1; 11) can provide a gateway function for a call or short message, the method comprising the apparatus (1; 11), in response to receiving a call or short message from one network side of the apparatus (1; 11) that is intended to be transmitted by the gateway function of the apparatus (1; 11) to the other network side of the apparatus (1; 11), providing the call traffic or short message to a terminal function of the apparatus (1; 11) and not relaying the call traffic or short message to any other terminal which is operating on the other network side of the apparatus (1; 11).

11. A computer program element comprising computer software code portions for performing the method of any one of claims 6 to 10 when the program element is run on data processing means.

## Patentansprüche

1. Einrichtung (1; 11) zur Verwendung in einem Kommunikationssystem, in dem Endgeräte des Systems miteinander über eine Netzwerkinfrastruktur (4) des Systems und/oder in einem Direktbetriebsmodus, in dem Endgeräte miteinander kommunizieren können, ohne dass die Kommunikation über die Netzwerkinfrastruktur (4) abläuft, kommunizieren können, wobei die Einrichtung (1; 11) umfasst:
Mittel zum Bereitstellen einer Direktbetriebsmodus-Repeaterfunktion und/oder einer Gatewayfunktion für ein Endgerät oder Endgeräte (2, 3, 5, 6; 12, 13, 14) des Kommunikationssystems; und **gekennzeichnet durch**
Mittel, um einem Benutzer (9; 16) der Einrichtung (1; 11) zu erlauben, an einem Anruf teilzunehmen, für den die Einrichtung (1; 11) eine Repeater- und/oder Gatewayfunktion bereitstellt und/oder bereitstellen soll; und **dadurch, dass** sie weiter umfasst:
Mittel zum, wenn der Benutzer (9; 16) der Einrichtung (1; 11) wünscht, in einem laufenden Anruf zu übertragen oder einen Anruf zu beginnen, für den die Einrichtung (1; 11) eine Repeaterfunktion bereitstellt und/oder bereitstellen soll, Signalisieren an alle der anderen Teilnehmer in dem Anruf, als ob das Signalisieren von einem Endgerät stammt, das in einem Direktbetriebsmodus in Betrieb ist, über die Repeaterfunktion, die die Einrichtung (1; 11) bereitstellt und/oder bereitstellen soll; und/oder
Mittel zum, wenn der Benutzer (9; 16) der Einrichtung (1; 11) wünscht, in einem laufenden Anruf zu übertragen oder einen Anruf zu beginnen, für den die Einrichtung (1; 11) eine Gatewayfunktion bereitstellt und/oder bereitstellen soll, Signalisieren an alle der anderen Teilnehmer in dem Anruf, als ob das Signalisieren von einem Endgerät stammt, das in Betrieb ist:
über die Netzwerkinfrastruktur (4) und die Gatewayfunktion, die die Einrichtung (1; 11) bereitstellt und/oder bereitstellen soll; oder
in einem Direktbetriebsmodus über die Gatewayfunktion, die die Einrichtung (1; 11) bereitstellt und/oder bereitstellen soll;
und
wobei die Mittel zum Bereitstellen der Direktmodus-Endgerätbetriebsfunktion und der Repeaterfunktion und/oder einer Gatewayfunktion eine interne Signalisierungsschnittstelle umfassen, die auf Schicht 1, Schicht 2 oder Schicht 3 oder jeder anderen Schicht des International Standards Organisation Open System Interface Basic Referenzmodells verknüpft werden kann.

2. Einrichtung (1; 11) nach Anspruch 1, die Mittel umfasst, um einem Benutzer (9; 16) der Einrichtung (1; 11) zu erlauben, die Anrufsinformationen und/oder den Anrufsverkehr von Anrufen, die die Repeater- und/oder Gatewayfunktion der Einrichtung (1; 11) verwenden, zu überwachen.

3. Einrichtung (1; 11) nach einem der vorstehenden Ansprüche, die Mittel zum Bereitstellen von Anrufsinformationen und/oder -verkehr an einen Benutzer (9; 16) für ausgewählte Anrufe, die die Einrichtung (1; 11) als einen Repeater und/oder Gateway verwenden, umfasst.

4. Einrichtung (1; 11) nach einem der vorstehenden Ansprüche, umfassend:
Mittel, um einem Benutzer (9; 16), einer internen Funktion oder Anwendung und/oder einer externen Funktion oder Anwendung der Einrichtung (1; 11) zu erlauben, eine Kurznachricht zu senden und/oder zu empfangen, für die die Einrichtung (1; 11) eine Repeater- und/oder Gatewayfunktion bereitstellt und/oder bereitstellen soll.

5. Einrichtung (1; 11) nach einem der vorstehenden Ansprüche, wobei die Einrichtung eine Gatewayfunktion für einen Anruf oder eine Kurznachricht bereitstellen kann und Mittel zum Bereitstellen, in Antwort auf Empfangen eines Anrufs oder einer Kurznachricht von einer Netzwerkseite der Einrichtung (1; 11), die durch die Gatewayfunktion der Einrichtung (1; 11) zu der anderen Netzwerkseite der Einrichtung (1; 11) übertragen werden sollen, des Anrufsverkehrs oder der Kurznachricht an eine Endgerätefunktion der Einrichtung (1; 11) und Nicht-Weiterleiten des Anrufsverkehrs oder der Kurznachricht an ein anderes Endgerät, das auf der anderen Netzwerkseite der Einrichtung (1; 11) in Betrieb ist, umfasst.

6. Verfahren eines Betreibens einer Einrichtung (1; 11) zur Verwendung in einem Kommunikationssystem, in dem Endgeräte des Systems miteinander über eine Netzwerkinfrastruktur (4) des Systems und/oder in einem Direktbetriebsmodus, in dem Endgeräte miteinander kommunizieren können, ohne dass die Kommunikation über die Netzwerkinfrastruktur (4) abläuft, kommunizieren können, wobei die Einrichtung (1; 11) Mittel zum Bereitstellen einer Direktbetriebsmodus-Repeaterfunktion und/oder einer Gatewayfunktion für ein Endgerät oder Endgeräte (2, 3, 5, 6; 12, 13, 14) des Kommunikationssystems umfasst; wobei das Verfahren **dadurch gekennzeichnet ist, dass** es umfasst, dass:
die Einrichtung (1; 11) einem Benutzer (9; 16) der Einrichtung (1; 11) erlaubt, an einem Anruf teilzunehmen, für den die Einrichtung (1; 11) eine Repeater- und/oder Gatewayfunktion bereitstellt und/oder bereitstellen soll; und dadurch, dass es weiter umfasst:
entweder:
Signalisieren durch die Einrichtung (1; 11), wenn der Benutzer (9; 16) der Einrichtung (1; 11) wünscht, in einem laufenden Anruf zu übertragen oder einen Anruf zu beginnen, für den die Einrichtung (1; 11) eine Repeaterfunktion bereitstellt und/oder bereitstellen soll, an alle der anderen Teilnehmer in dem Anruf, als ob das Signalisieren von einem Endgerät stammt, das in einem Direktbetriebsmodus in Betrieb ist, über die Repeaterfunktion, die die Einrichtung (1; 11) bereitstellt und/oder bereitstellen soll; oder
Signalisieren durch die Einrichtung (1; 11), wenn der Benutzer (9; 16) der Einrichtung (1; 11) wünscht, in einem laufenden Anruf zu übertragen oder einen Anruf zu beginnen, für den die Einrichtung (1; 11) eine Gatewayfunktion bereitstellt und/oder bereitstellen soll, an alle der anderen Teilnehmer in dem Anruf, als ob das Signalisieren von einem Endgerät stammt, das in Betrieb ist:
über die Netzwerkinfrastruktur (4) und die Gatewayfunktion, die die Einrichtung (1; 11) bereitstellt und/oder bereitstellen soll; oder
in einem Direktbetriebsmodus über die Gatewayfunktion, die die Einrichtung (1; 11) bereitstellt und/oder bereitstellen soll;
wobei:
Bereitstellen der Direktmodus-Endgerätbetriebsfunktion und der Repeaterfunktion und/oder Gatewayfunktion über eine interne Signalisierungsschnittstelle zwischen einer Endgerätefunktion und der Repeater- und/oder Gatewayfunktion realisiert wird, die die Funktionen auf Schicht 1, Schicht 2 oder Schicht 3 oder jeder anderen Schicht des International Standards Organisation Open System Interface Basic Referenzmodells verknüpft.

7. Verfahren nach Anspruch 6, umfassend, dass die Einrichtung (1; 11) einem Benutzer (9; 16) erlaubt, die Anrufsinformationen und/oder den Anrufsverkehr von Anrufen, die die Repeater- und/oder Gatewayfunktion der Einrichtung (1; 11) verwenden, zu überwachen.

8. Verfahren nach einem der Ansprüche 6 bis 7, umfassend, dass die Einrichtung (1; 11) die Anrufsinformationen und/oder den Anrufsverkehr an einen Benutzer (9; 16) für ausgewählte Anrufe bereitstellt, die die Einrichtung (1; 11) als einen Repeater und/oder Gateway verwenden.

9. Verfahren nach einem der Ansprüche 6 bis 8, umfassend:
dass die Einrichtung (1; 11) einem Benutzer (9; 16), einer internen Funktion oder Anwendung und/oder einer externen Funktion oder Anwendung der Einrichtung (1; 11) erlaubt, eine Kurznachricht zu senden und/oder zu empfangen, für die die Einrichtung (1; 11) eine Repeater- und/oder Gatewayfunktion bereitstellt und/oder bereitstellen soll.

10. Verfahren nach einem der Ansprüche 6 bis 9, wobei die Einrichtung (1; 11) eine Gatewayfunktion für einen Anruf oder eine Kurznachricht bereitstellen kann, wobei das Verfahren umfasst, dass die Einrichtung (1; 11), in Antwort auf Empfangen eines Anrufs oder einer Kurznachricht von einer Netzwerkseite der Einrichtung (1; 11), die durch die Gatewayfunktion der Einrichtung (1; 11) zu der anderen Netzwerkseite der Einrichtung (1; 11) übertragen werden sollen, den Anrufsverkehr oder die Kurznachricht an eine Endgerätefunktion der Einrichtung (1; 11) bereitstellt und den Anrufsverkehr oder die Kurznachricht nicht an ein anderes Endgerät weiterleitet, das auf der anderen Netzwerkseite der Einrichtung (1; 11) in Betrieb ist.

11. Computerprogrammelement, das Computersoftwarecodeabschnitte zum Durchführen des Verfahrens nach einem der Ansprüche 6 bis 10 umfasst, wenn das Programmelement auf Datenverarbeitungsmitteln ausgeführt wird.

## Revendications

1. Appareil (1; 11) pour une utilisation dans un système de communication dans lequel des terminaux du système peuvent communiquer les uns avec les autres via une infrastructure de réseau (4) du système et/ou dans un mode de fonctionnement direct dans lequel des terminaux peuvent communiquer les uns avec les autres sans que la communication passe via l'infrastructure de réseau (4), l'appareil (1 ; 11) comprenant :
des moyens pour fournir une fonction de répéteur de fonctionnement en mode direct et/ou une fonction de passerelle pour un terminal ou des terminaux (2, 3, 5, 6 ; 12, 13, 14) du système de communication ; et **caractérisé par**
des moyens pour autoriser un utilisateur (9 ; 16) de l'appareil (1 ; 11) à participer à un appel pour lequel l'appareil (1 ; 11) fournit et/ou est censé fournir une fonction de répéteur et/ou de passerelle ; et en ce qu'il comprend en outre :
des moyens pour, lorsque l'utilisateur (9 ; 16) de l'appareil (1 ; 11) souhaite transmettre dans un appel en cours ou initier un appel pour lequel l'appareil (1; 11) fournit et/ou est censé fournir une fonction de répéteur, signaler à tous les autres participants à l'appel comme si la signalisation émanait d'un terminal fonctionnant dans un mode de fonctionnement direct via la fonction de répéteur que l'appareil (1 ; 11) fournit et/ou est censé fournir ; et/ou
des moyens pour, lorsque l'utilisateur (9 ; 16) de l'appareil (1 ; 11) souhaite transmettre dans un appel en cours ou initier un appel pour lequel l'appareil (1; 11) fournit et/ou est censé fournir une fonction de passerelle, signaler à tous les autres participants à l'appel comme si la signalisation émanait d'un terminal fonctionnant :
via l'infrastructure de réseau (4) et la fonction de passerelle que l'appareil (1 ; 11) fournit et/ou est censé fournir ; ou
dans un mode de fonctionnement direct via la fonction de passerelle que l'appareil (1 ; 11) fournit et/ou est censé fournir ;
et
dans lequel les moyens pour fournir la fonction de terminal en mode direct et la fonction de répéteur et/ou une fonction de passerelle comprennent une interface de signalisation interne qui peut être reliée au niveau d'une couche 1, d'une couche 2 ou d'une couche 3 ou de n'importe quelle autre couche du modèle de référence de base d'interfaces des systèmes ouverts de l'Organisation internationale de normalisation.

2. Appareil (1 ; 11) selon la revendication 1, comprenant des moyens pour autoriser un utilisateur (9 ; 16) de l'appareil (1 ; 11) à surveiller des informations d'appel et/ou le trafic d'appel d'appels à l'aide de la fonction de répéteur et/ou de passerelle de l'appareil (1 ; 11).

3. Appareil (1 ; 11) selon l'une quelconque des revendications précédentes, comprenant des moyens pour fournir des informations et/ou un trafic d'appel à un utilisateur (9 ; 16) pour des appels sélectionnés qui utilisent l'appareil (1; 11) en tant que répéteur et/ou passerelle.

4. Appareil (1 ; 11) selon l'une quelconque des revendications précédentes, comprenant :
des moyens pour autoriser un utilisateur (9 ; 16), une fonction ou une application interne et/ou une fonction ou une application externe de l'appareil (1 ; 11) à envoyer et/ou à recevoir un message court pour lequel l'appareil (1 ; 11) fournit et/ou est censé fournir une fonction de répéteur et/ou de passerelle.

5. Appareil (1 ; 11) selon l'une quelconque des revendications précédentes, dans lequel l'appareil (1; 11) peut fournir une fonction de passerelle pour un appel ou un message court, et comprend des moyens pour, en réponse à la réception d'un appel ou d'un message court en provenance du côté réseau de l'appareil (1 ; 11) qui est destiné à être transmis par la fonction de passerelle de l'appareil à l'autre côté réseau de l'appareil (1; 11), fournir le trafic d'appel ou le message court à une fonction de terminal de l'appareil (1 ; 11) et ne pas relayer le trafic d'appel ou le message court à un quelconque autre terminal qui fonctionne sur l'autre côté réseau de l'appareil (1 ; 11).

6. Procédé de fonctionnement d'un appareil (1; 11) pour une utilisation dans un système de communication dans lequel des terminaux du système peuvent communiquer les uns avec les autres via une infrastructure de réseau (4) du système et/ou dans un mode de fonctionnement direct dans lequel des terminaux peuvent communiquer les uns avec les autres sans que la communication passe via l'infrastructure de réseau (4), l'appareil (1 ; 11) comprenant des moyens pour fournir une fonction de répéteur de fonctionnement en mode direct et/ou une fonction de passerelle pour un terminal ou des terminaux (2, 3, 5, 6; 12, 13, 14) du système de communication ; le procédé étant **caractérisé en ce qu'**il comprend :
l'appareil (1 ; 11) autorisant un utilisateur (9 ; 16) de l'appareil (1 ; 11) à participer à un appel pour lequel l'appareil (1 ; 11) fournit et/ou est censé fournir une fonction de répéteur et/ou de passerelle ; et **en ce qu'**il comprend en outre :
soit :
la signalisation par l'appareil (1 ; 11), lorsque l'utilisateur (9 ; 16) de l'appareil (1 ; 11) souhaite transmettre dans un appel en cours ou initier un appel pour lequel l'appareil (1 ; 11) fournit et/ou est censé fournir une fonction de répéteur, à tous les autres participants à l'appel comme si la signalisation émanait d'un terminal fonctionnant dans un mode de fonctionnement direct via la fonction de répéteur que l'appareil (1 ; 11) fournit et/ou est censé fournir ;
soit :
la signalisation par l'appareil (1 ; 11), lorsque l'utilisateur (9 ; 16) de l'appareil (1 ; 11) souhaite transmettre dans un appel en cours ou initier un appel pour lequel l'appareil (1 ; 11) fournit et/ou est censé fournir une fonction de passerelle, à tous les autres participants à l'appel comme si la signalisation émanait d'un terminal fonctionnant :
via l'infrastructure de réseau (4) et la fonction de passerelle que l'appareil (1 ; 11) fournit et/ou est censé fournir ; ou
dans un mode de fonctionnement direct via la fonction de passerelle que l'appareil (1 ; 11) fournit et/ou est censé fournir ;
moyennant quoi
la fourniture de la fonction de terminal en mode direct et de la fonction de répéteur et/ou de la fonction de passerelle est réalisée via une interface de signalisation interne entre une fonction de terminal et la fonction de répéteur et/ou de passerelle qui relie les fonctions au niveau de la couche 1, de la couche 2 ou de la couche 3 ou de n'importe quelle autre couche du modèle de référence de base d'interfaces des systèmes ouverts de l'Organisation internationale de normalisation.

7. Procédé selon la revendication 6, comprenant l'appareil (1 ; 11) autorisant un utilisateur (9 ; 16) à surveiller les informations d'appel et/ou le trafic d'appel d'appels à l'aide de la fonction de répéteur et/ou de passerelle de l'appareil (1 ; 11).

8. Procédé selon l'une quelconque des revendications 6 à 7, comprenant l'appareil (1 ; 11) fournissant des informations d'appel et/ou un trafic d'appel à un utilisateur (9; 16) pour des appels sélectionnés qui utilisent l'appareil (1; 11) en tant que répéteur et/ou passerelle.

9. Procédé selon l'une quelconque des revendications 6 à 8, comprenant :
l'appareil (1 ; 11) autorisant un utilisateur (9 ; 16), une fonction ou une application interne et/ou une fonction ou une application externe de l'appareil (1 ; 11) à envoyer et/ou à recevoir un message court pour lequel l'appareil (1 ; 11) fournit et/ou est censé fournir une fonction de répéteur et/ou de passerelle.

10. Procédé selon l'une quelconque des revendications 6 à 9, dans lequel l'appareil (1 ; 11) peut fournir une fonction de passerelle pour un appel ou un message court, le procédé comprenant l'appareil (1 ; 11), en réponse à la réception d'un appel ou d'un message court en provenance d'un côté réseau de l'appareil (1 ; 11) qui est destiné à être transmis par la fonction de passerelle de l'appareil (1 ; 11) à l'autre côté réseau de l'appareil (1 ; 11), fournissant le trafic d'appel ou le message court à une fonction de terminal de l'appareil (1 ; 11) et ne relayant pas le trafic d'appel ou le message court à un quelconque autre terminal qui fonctionne sur l'autre côté réseau de l'appareil (1; 11).

11. Élément de programme informatique comprenant des portions de code logiciel informatique pour réaliser le procédé selon l'une quelconque des revendications 6 à 10 lorsque l'élément de programme est exécuté sur des moyens de traitement de données.
